# EUROPEAN PATENT APPLICATION

(11) **EP 4 414 570 A1**
(43) Date of publication of application: **14.08.2024**
(21) Application number: 24156968.0
(22) Date of filing: 11.02.2024
(51) Int. Cl.: F16B 21/08, F16B 5/06

(54) **FIXINGS WITH VISUAL INSTALLATION STATUS INDICATORS**

(30) Priority: 13.02.2023 US 202363484618 P
(71) Applicant: HellermannTyton Corporation, Milwaukee, WI 53224 (US)
(72) Inventor: Klos, Scott G., Grafton, Wisconsin (US); Toll, Michael H., Whitefish Bay, Wisconsin (US)
(74) Representative: Hernandez, Yorck

(57) **Abstract**

This document describes fixings with visual installation status indicators. In aspects, the fixings may provide a user with a visual cue that indicates an installation status of the fixing, for example, an incomplete installation status or a complete installation status. In an aspect, a fixing (100) is configured for attaching to a support structure (190) at a bore (196) defined in the support structure (190). The fixing (100) includes a mount fastener (110) configured for longitudinal insertion into the bore (196), a body section (130) that extends from the mount fastener (110), and at least one visual indicator (150) configured to indicate an installation status of the fixing (100) to a user. The body section (130) is configured to contact a first side (192) of the support structure (190) to limit the longitudinal insertion of the mount fastener (110) into the bore (196).

## Description

### RELATED APPLICATION

This application claims benefit under 35 U.S.C. § 119(e) to U.S. Provisional Patent Application Serial No. 63/484,618 filed on February 13, 2023, the disclosure of which is incorporated by reference herein in its entirety.

### BACKGROUND

A fixing may be used to attach one or more components (e.g., channels, ratchet P-Clamps, elongated articles) to a support structure (e.g., a vehicle panel, a housing) via a mounting aperture (e.g., bore) defined in the support structure. Fixings are frequently used in vehicles (e.g., automobiles, trucks, airplanes, ships, boats) to locate a component in a fixed position relative to other components. For example, a user (e.g., installer, operator) can use a fixing to attach a component (e.g., a bundle of elongated articles) to the chassis of a vehicle at a desired location. A user can also use a fixing to route components and/or to separate components from one another.

If a fixing is not fully seated and/or installed properly to the support structure, the fixing may become detached from the support structure after installation. Further, if the component is not fully seated or installed properly to an object support of the fixing, the component may become detached from the fixing after installation. To prevent these installation failure outcomes, the user may need to perform a secondary check of the installation status of the fixing, which may include an application of a manually applied visual mark after installation or the taking of another remedial action. Alternatively, to prevent installation failure outcomes, the user may switch to a type of mount fastener (e.g., an arrowhead mount fastener (aka an "arrowhead fastener")) that provides audio and/or tactile feedback when installed. However, in a manufacturing environment, such audio and tactile feedback may be hard to perceive. In the end, taking such remedial actions can cost both time and labor.

### SUMMARY

This document describes fixings with visual installation status indicators. In some aspects, the techniques described herein relate to a fixing configured for attaching to a support structure at a bore defined in the support structure, the fixing including a mount fastener configured for longitudinal insertion into the bore; a body section that extends from the mount fastener, the body section configured to contact a first side of the support structure to limit the longitudinal insertion of the mount fastener into the bore; and at least one visual indicator configured to indicate an installation status of the fixing to a user.

In some aspects, the techniques described herein relate to a fixing configured for attaching to a support structure at a bore defined in the support structure, the fixing including: a mount fastener configured for longitudinal insertion into the bore, the mount fastener including: a mounting stud; and a plurality of branches extending from the mounting stud; and a body section extending from the mount fastener, the body section configured to contact a first side of the support structure to limit the longitudinal insertion of the mount fastener into the bore, the mount fastener extending from a bottom side of the body section; and at least one visual indicator configured to indicate an installation status of the fixing, wherein the visual indicator includes indicia applied to at least one of the branches, the indicia configured to visually indicate when the fixing is seated in the bore, wherein the branches are configured for deflection in a direction of the body section upon insertion of the mount fastener into the bore.

This Summary is provided to introduce simplified concepts of fixings with visual installation status indicators, which are further described below in the Detailed Description and are illustrated in the Drawings. This Summary is not intended to identify essential features of the claimed subject matter, nor is it intended for use in determining the scope of the claimed subject matter.

One aspect relates to a fixing configured for attaching to a support structure at a bore defined in the support structure, the fixing comprising:
- a mount fastener configured for longitudinal insertion into the bore;
- a body section that extends from the mount fastener, the body section configured to contact a first side of the support structure to limit the longitudinal insertion of the mount fastener into the bore; and
- at least one visual indicator configured to indicate an installation status of the fixing to a user.

In a further embodiment, it may be provided that the visual indicator has a variable appearance that varies based on the installation status of the fixing.

In a further embodiment, it may be provided that the variable appearance of the visual indicator includes a length of the visual indicator that varies based on the installation status.

In a further embodiment, it may be provided that the fixing includes a longitudinal axis along which the mount fastener extends,
wherein the body section further comprises:
- a head portion, the head portion defining an outer edge spaced apart from the longitudinal axis, and
- wherein in an incomplete installation status, the visual indicator does not extend past the outer edge, and
- wherein in a complete installation status, the visual indicator extends past the outer edge.

In a further embodiment, it may be provided that the visual indicator is attached to the mount fastener before the mount fastener is inserted into the bore, with at least a portion of the visual indicator received between a bottom side of the body section and the first side of the support structure.

In a further embodiment, it may be provided that the visual indicator has an annular shape that includes a first side opposite a second side and an open center defined therethrough, and
- the open center is sized to receive a portion of the mount fastener therethrough.

In a further embodiment, it may be provided that the open center defines a first end of the visual indicator,
wherein the visual indicator extends from the first end to a second end,
wherein the open center has an inner diameter,
wherein the second end has an outer diameter, and
wherein the outer diameter is greater than the inner diameter.

In a further embodiment, it may be provided that the visual indicator comprises:
- a compressible disk configured for compression between a bottom side of the body section and the first side of the support structure,

wherein in an uncompressed state the disk has a first diameter,
wherein in a compressed state the disk has a second diameter, and
wherein the second diameter is greater than the first diameter.

In a further embodiment, it may be provided that the compressible disk comprises:
- at least one radially extending notch defined in the compressible disk that defines at least one radial flange in the compressible disk; and
- at least one sidewall defined in the radial flange configured to flatten when the compressible disk is compressed between the bottom side of the body section and the first side of the support structure.

In a further embodiment, it may be provided that the body section further comprises:
- a head portion configured to limit the insertion of the mount fastener into the bore, the head portion defining an outer edge spaced apart from a longitudinal axis,
- wherein in the compressed state the compressible disk flexes to extend an edge of the disk outwards relative to the outer edge to indicate the installation status,
- wherein in an incomplete installation status the edge of the disk does not extend past the outer edge, and
- wherein in a complete installation status the edge of the disk extends past the outer edge.

In a further embodiment, it may be provided that the compressible disk comprises:
- at least one flute defined in the compressible disk, the flute configured to flatten when the compressible disk is compressed between the bottom side of the body section and the first side of the support structure.

In a further embodiment, it may be provided that the body section further comprises at least one orifice defined therethrough, and
- wherein the visual indicator further comprises:
- an annular flange configured for receipt onto the mount fastener before longitudinal insertion into the bore; and
- a post extending from the annular flange, the post configured for extending through the orifice, wherein the post extending through the orifice indicates the installation status of the fixing.

In a further embodiment, it may be provided that the body section further comprises at least one notch defined therethrough, and
- wherein the visual indicator further comprises:
- a disk configured for receipt onto the mount fastener before longitudinal insertion into the bore; and
- at least one flange extending from the disk, a portion of the flange configured for extending through the notch, the flange including a spring arm configured for contacting the bottom side of the body section to force a tip of the flange outwards, wherein a positioning of the tip of the flange relative to the notch indicates the installation status of the fixing.

In a further embodiment, it may be provided that the visual indicator comprises:
- an elongated strip having a fixed end extending to at least one free end that defines a length therebetween, the elongated strip attached at the fixed end to the mount fastener, the elongated strip free at the free end and configured to extend out of the bore, wherein a portion of the length that extends out of the bore indicates the installation status of the fixing.

In a further embodiment, it may be provided that the at least one visual indicator comprises:
- at least one paint dot disposed on the body section, the paint dot configured to rupture and release paint responsive to the body section contacting the first side of the support structure to indicate the installation status of the fixing.

In a further embodiment, it may be provided that the at least one paint dot is configured to rupture and emit paint outside of a periphery of the body section to indicate the installation status of the fixing.

In a further embodiment, it may be provided that the body section further comprises at least one orifice defined therethrough, and
- wherein the at least one paint dot is configured to rupture and emit paint through the at least one orifice to indicate the installation status of the fixing.

In a further embodiment, it may be provided that the fixing is comprising an object support configured to attach to a component.

In a further embodiment, it may be provided that the visual indicator further comprises:
- a tear-off label, the tear-off label comprising:
- a body including a fastener receiver defined therethrough, the fastener receiver sized to receive a portion of the mount fastener therethrough before the mount fastener is inserted into the bore, with the visual indicator received between a bottom side of the body section and the first side of the support structure,
- at least a portion of the body configured to be torn off by a user to visually indicate that the fixing is seated in the bore.

Another aspect relates to a fixing configured for attaching to a support structure at a bore defined in the support structure, the fixing comprising:
- a mount fastener configured for longitudinal insertion into the bore, the mount fastener comprising:
   a mounting stud; and
- a plurality of branches extending from the mounting stud; and
- a body section extending from the mount fastener, the body section configured to contact a first side of the support structure to limit the longitudinal insertion of the mount fastener into the bore, the mount fastener extending from a bottom side of the body section; and
- at least one visual indicator configured to indicate an installation status of the fixing, wherein the visual indicator comprises indicia applied to at least one of the branches, the indicia configured to visually indicate when the fixing is seated in the bore,
- wherein the branches are configured for deflection in a direction of the body section upon insertion of the mount fastener into the bore.

Advantages and advantageous embodiments of the latter aspects correspond to the advantages and advantageous embodiments described for the former aspect, and vice versa. The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

### BRIEF DESCRIPTION OF THE DRAWINGS

The details of one or more aspects of fixings with visual installation status indicators are described with reference to the following Drawings, in which the use of the same numbers in different instances may indicate like features and/or components.
FIG. 1A is a schematic illustration of a first fixing that illustrates a first operation in an installation sequence.
FIG. 1B is a schematic illustration of the first fixing that illustrates a second operation in the installation sequence.
FIG. 2A is a perspective view of a second fixing in a first configuration.
FIG. 2B is a perspective view of the second fixing in a second configuration.
FIG. 2C is a perspective, environmental view of the second fixing that illustrates a first operation in an installation sequence.
FIG. 2D is a perspective, environmental view of the second fixing that illustrates a second operation in an installation sequence.
FIG. 3A is a bottom perspective view of a third fixing, illustrated uninstalled.
FIG. 3B is a top perspective, environmental view of the third fixing, illustrated installed.
FIG. 4A is a bottom perspective view of a fourth fixing, illustrated uninstalled.
FIG. 4B is a top perspective view of the fourth fixing, illustrated installed.
FIG. 4C is a top perspective, environmental view of the fourth fixing, illustrated installed.
FIG. 5A is a top perspective view of a visual indicator of a fifth fixing.
FIG. 5B is a cross-sectional view of the fifth fixing along lines 5B-5B in FIG. 5C, illustrated uninstalled.
FIG. 5C is a top perspective view of the fifth fixing, illustrated uninstalled.
FIG. 5D is a top perspective, environmental view of the fifth fixing, illustrated installed.
FIG. 5E is a cross-sectional, environmental view of the fifth fixing along lines 5E-5E in FIG. 5D, illustrated installed.
FIG. 6A is a cross-sectional view of a sixth fixing, illustrated uninstalled.
FIG. 6B is a bottom perspective view of the sixth fixing, illustrated uninstalled.
FIG. 7 is a bottom perspective view of seventh fixing.
FIG. 8A is a top perspective view of a visual indicator of an eighth fixing.
FIG. 8B is a top perspective view of the eighth fixing, illustrated uninstalled.
FIG. 8C is a partial, top perspective view of the eighth fixing, illustrated installed.
FIG. 8D is a cross-sectional, environmental view of the eighth fixing along lines 8D-8D in FIG. 8C, illustrated installed.
FIG. 9A is a top perspective view of a visual indicator of a ninth fixing.
FIG. 9B is a side perspective view of the ninth fixing, illustrated uninstalled.
FIG. 9C is a cross-sectional view of the ninth fixing along lines 9C-9C in FIG. 9B, illustrated uninstalled.
FIG. 9D is a top perspective, environmental view of the ninth fixing, illustrated installed.
FIG. 10A is a top perspective view of a visual indicator of a tenth fixing.
FIG. 10B is a side perspective view of the tenth fixing, illustrated uninstalled.
FIG. 10C is a cross-sectional view of the tenth fixing along lines 10C-10C in FIG. 10B, illustrated uninstalled.
FIG. 10D is a top perspective, environmental view of the tenth fixing, illustrated installed.
FIG. 11A is a top perspective view of an eleventh fixing, illustrated in an open configuration.
FIG. 11B is a top perspective view of the eleventh fixing, illustrated in a closed configuration.
FIG. 12 is a top perspective view of a twelfth fixing, illustrated uninstalled.
FIG. 13 is a top perspective view of a thirteenth fixing, illustrated uninstalled.
FIG. 14A is a top perspective view of a visual indicator of a fourteenth fixing.
FIG. 14B is a side perspective view of the fourteenth fixing, illustrated uninstalled.

### DETAILED DESCRIPTION

### Overview

This document describes fixings with visual installation status indicators. In aspects, the fixings may provide a user with a visual cue that indicates an installation status of the fixing (e.g., a complete installation status, an incomplete installation status). A complete installation status may include at least one of an indication that the fixing is fully seated on a support structure, an indication that the fixing is installed properly to the support structure, an indication that a component is fully seated to an object support of the fixing, an indication that the component is installed properly to the object support, and the like. An incomplete installation status may include at least one of an indication that the fixing is not fully seated on the support structure, an indication that the fixing is not installed properly to the support structure, an indication that a component is not fully seated to an object support of the fixing, an indication that the component is not installed properly to the object support, and the like.

A fixing may be configured to attach to a support structure (e.g., a vehicle panel, a housing) at a mounting aperture (e.g., bore) defined in the support structure. For example, the fixing may include a mount fastener that is configured for longitudinal insertion into the bore. The fixing may include a body section that extends from the mount fastener. The body section may be configured to contact a first side of the support structure to limit the longitudinal insertion of the mount fastener into the bore. The fixing may include at least one visual installation status indicator (herein a "visual indicator") that is configured to indicate an installation status of the fixing to a user. A fixing may be used to attach one or more components (e.g., channels, ratchet P-Clamps, elongated articles) to the support structure.

### Example Devices

This publication describes and illustrates various aspects of fixings with visual installation status indicators.

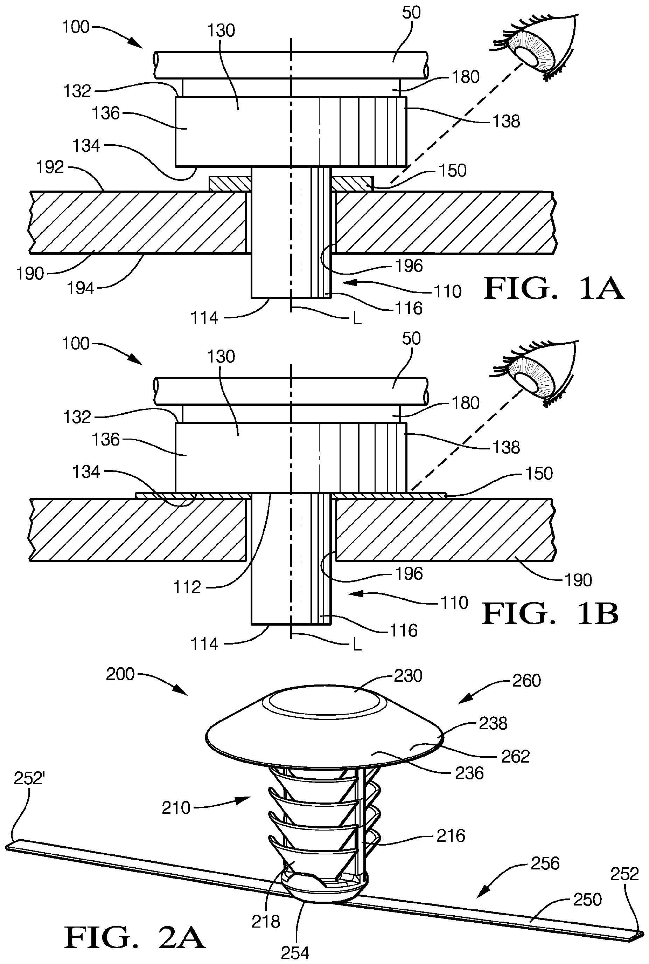

FIGs. 1A and 1B are schematic illustrations of an improved fixing 100 (aka the "first example fixing") with a visual installation status indicator (herein a "visual indicator"). FIGs. 2A-14B, described in detail below, illustrate other aspects of the improved fixing with a visual indicator.

FIG. 1A illustrates a first operation in an installation sequence and FIG. 1B illustrates a second operation in an installation sequence, both of which are described below. The fixing 100 is configured to attach to a support structure 190. The support structure 190 may include one or more of a panel (e.g., door panel, trunk panel, wheel housing panel, dash panel), housing, machine frame, machine rail, vehicle frame, vehicle chassis, sill plate, object surface, and the like. The support structure 190 defines a bore 196. The bore 196 may be a through bore, reentrant bore, blind hole, through hole, opening, orifice, aperture, slot, and the like that is defined in the support structure 190 (e.g., defined in a boss of the support structure 190, defined in a planar surface of the support structure 190, defined in another surface of the support structure 190). The bore 196 may be threaded. The bore 196 may be circular, ovular, rectilinear, slot shaped (e.g., an opening that is generally longer than it is wide), or another shape or structure.

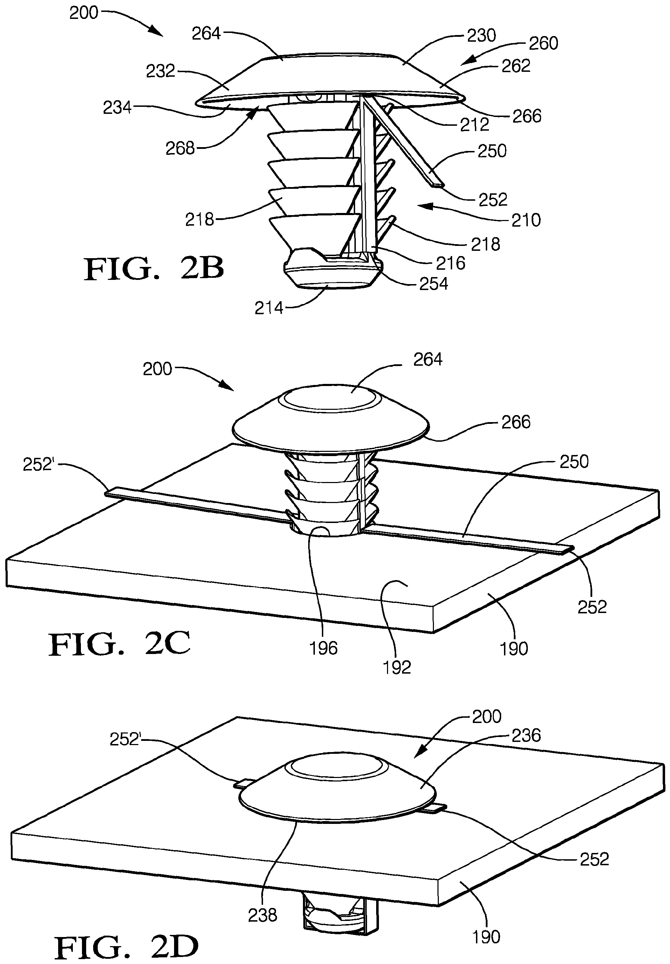

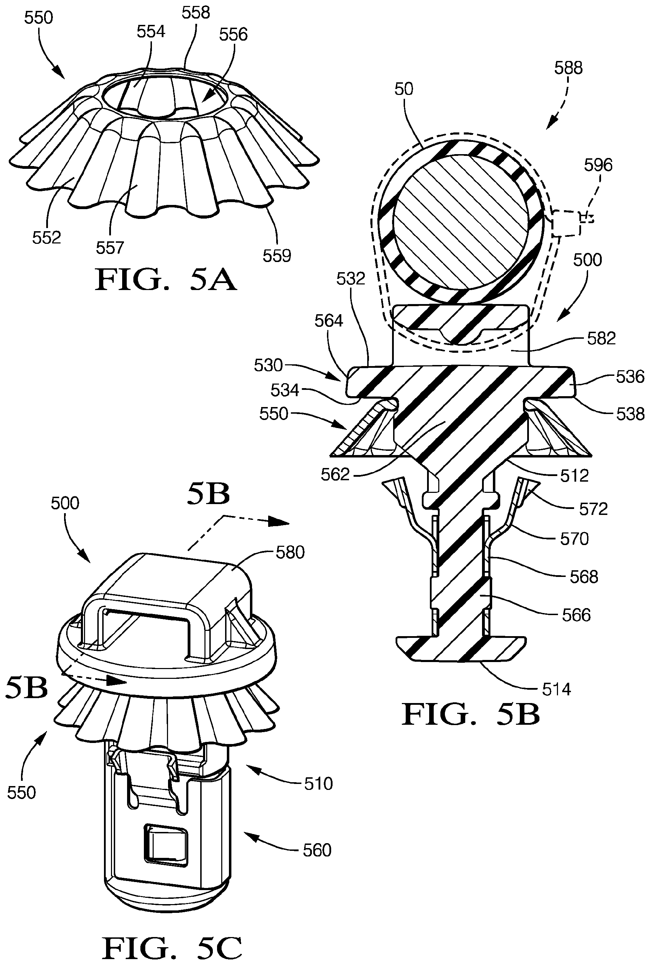

The support structure 190 may include a first side 192 that is opposite a second side 194, which define a thickness therebetween. In the aspect illustrated in FIGs. 1A and 1B, the bore 196 extends between the first side 192 and the second side 194. The other aspects of the improved fixing 100 with a visual indicator illustrated in FIGs. 2A-14B and described in detail below may also be utilized with a support structure (e.g., support structure 190). For example, the support structure 190 is also illustrated in FIGs. 2C, 2D, 3B, 4C, 8D, 9D, and 10D. A support structure 590, including a first side 592, second side 594, and bore 596, is illustrated in FIGs. 5A-5E and described below.

The fixing 100 may include a mount fastener 110 that is configured to attach the fixing 100 to the support structure 190. In aspects, the mount fastener 110 attaches to the support structure 190 by engaging the bore 196. The attachment between the mount fastener 110 and the support structure 190 may be a releasable attachment. The mount fastener 110 may be elongated, extending along a longitudinal axis (L) and configured for longitudinal insertion into the bore 196. In FIGs. 1A and 1B, the mount fastener 110 has a proximal end 112 opposite a distal end 114, which define the longitudinal axis therebetween. The proximal end 112 of the mount fastener 110 may attach to a body section 130 at a bottom side 134 thereof.

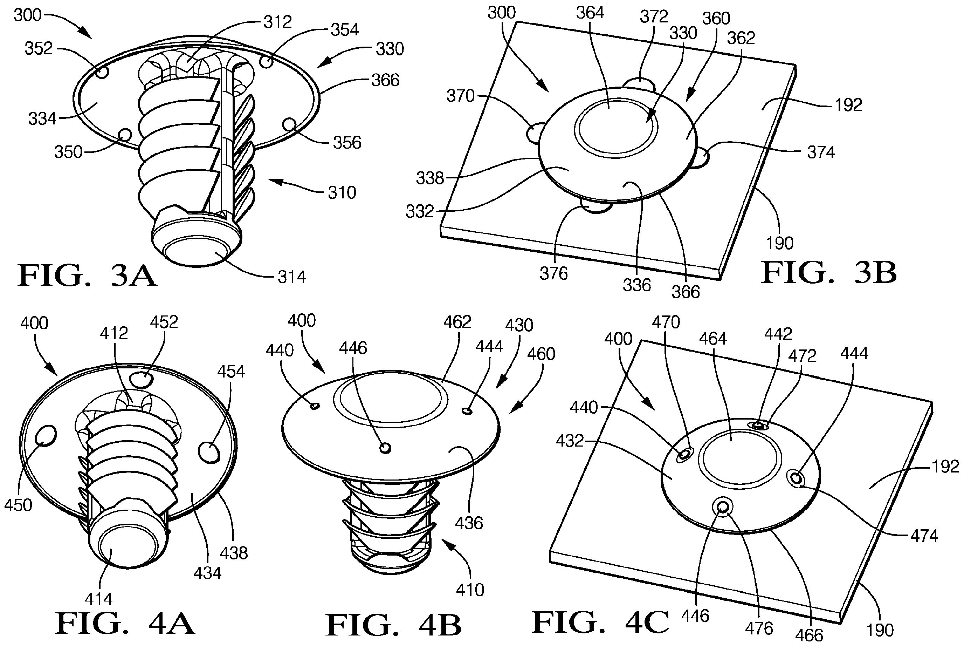

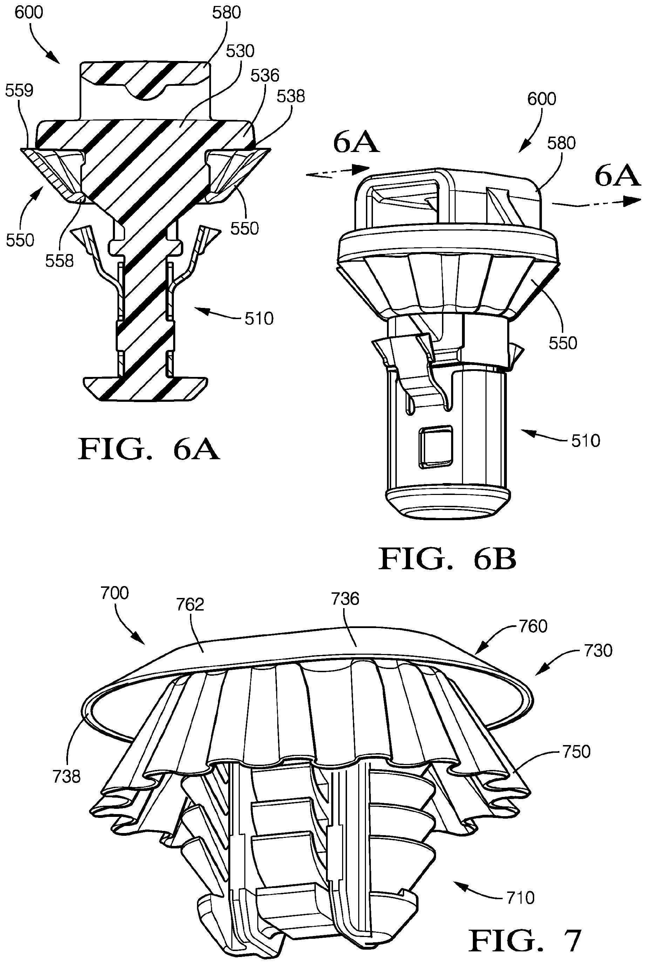

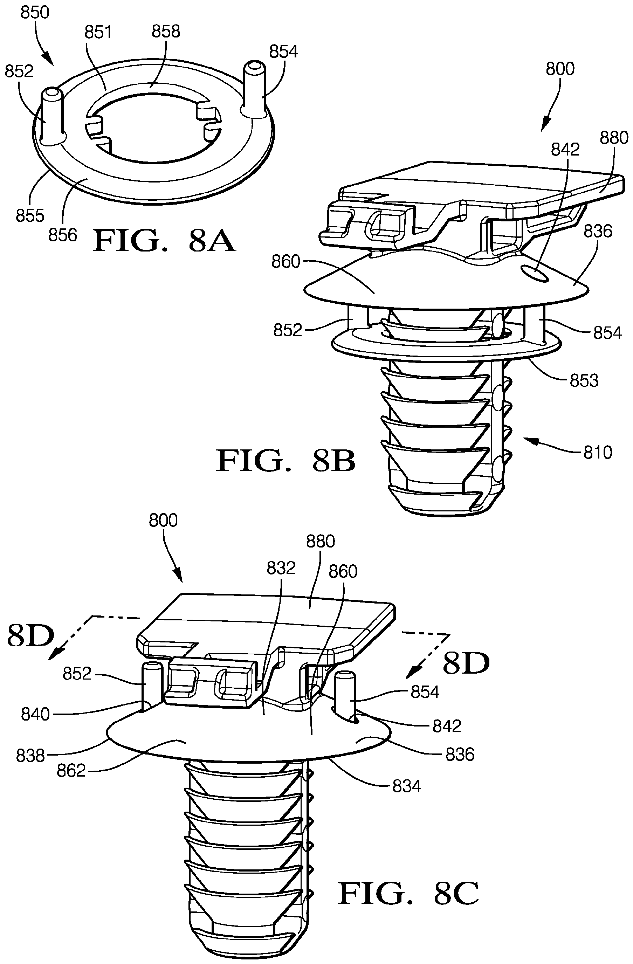

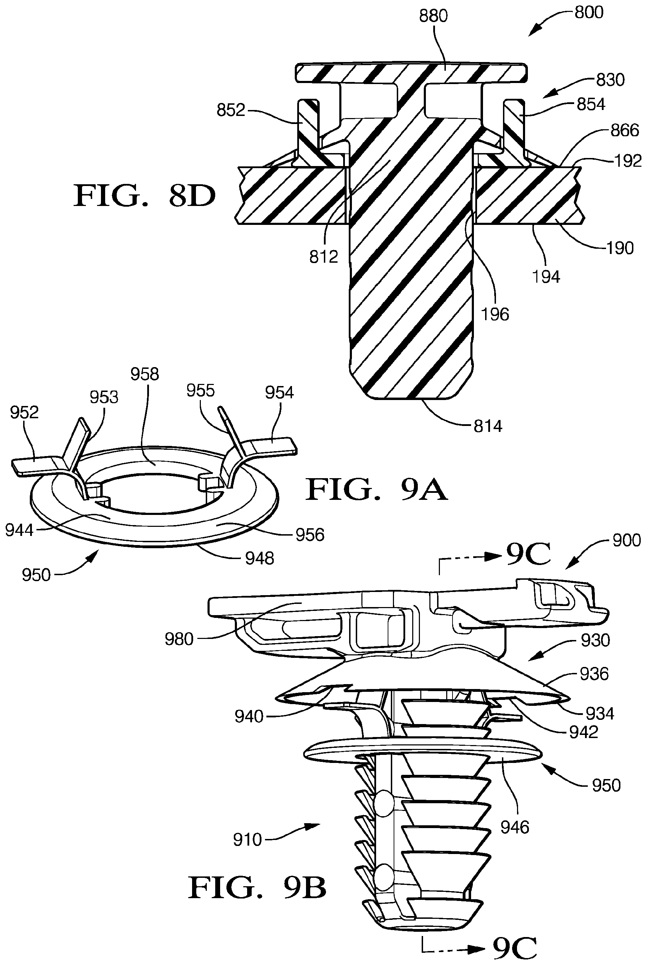

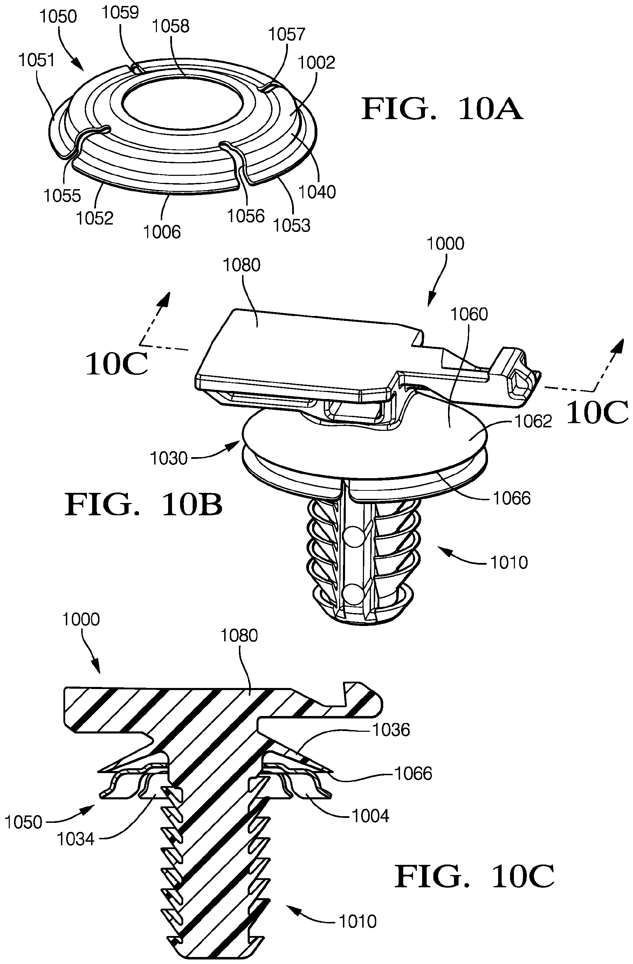

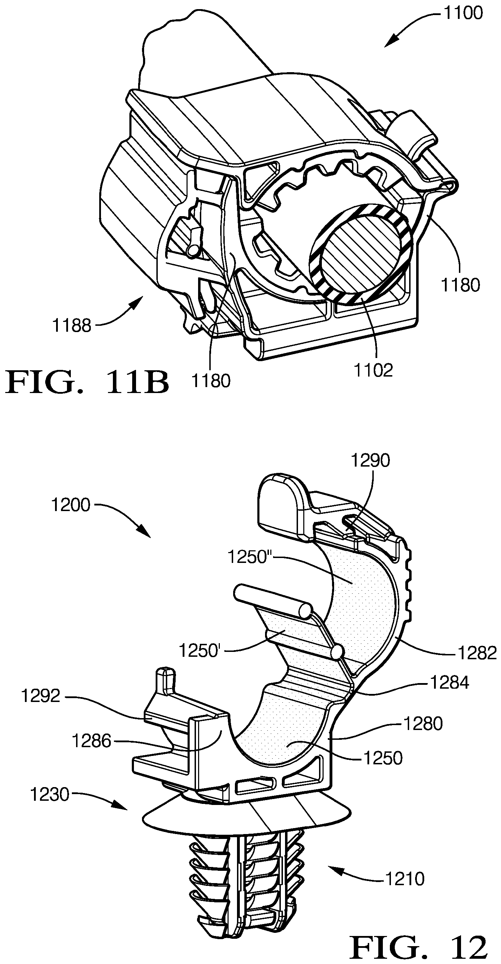

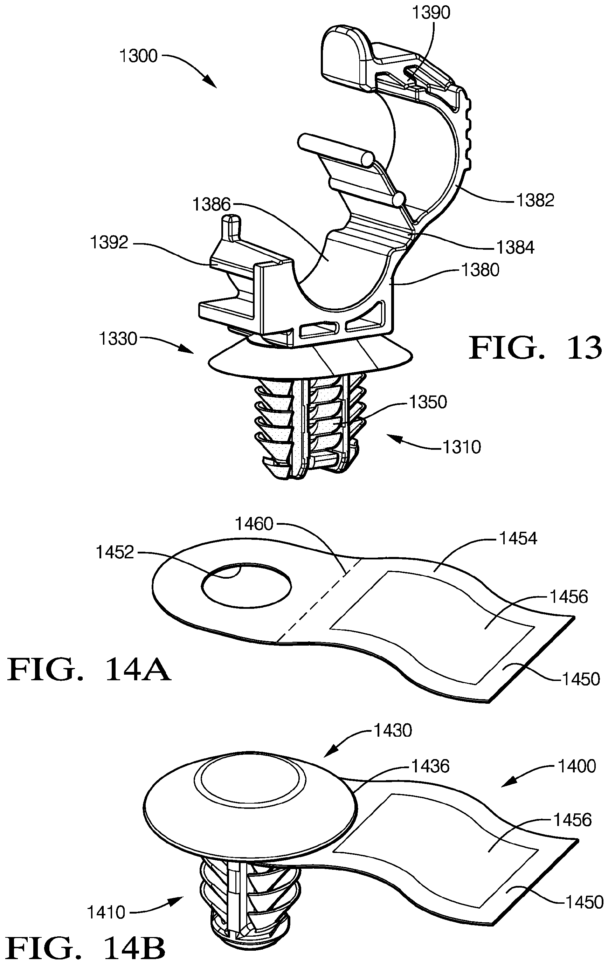

The mount fastener 110 may be circular, ovular, or another shape. For example, the mount fastener 210 in FIGs. 2A-2D is circular, the mount fastener 310 in FIGs. 3A and 3B is circular, the mount fastener 410 in FIGs. 4A-4C is circular, the mount fastener 510 in FIGs. 5B-5E and in FIGs. 6A and 6B is ovular, the mount fastener 710 in FIG. 7 is ovular, the mount fastener 810 in FIGs. 8B-8D is circular, the mount fastener 910 in FIGs. 9B-9D is circular, the mount fastener 1010 in FIGs. 10B-10D is circular, the mount fastener 1210 in FIG. 12 is ovular, the mount fastener 1310 in FIG. 13 is ovular, and the mount fastener 1410 in FIG. 14B is circular. The shape of the mount fastener 110 may correspond to the shape of the bore 196. For example, the bore 196 is illustrated in the Figures as having a round, cylindrical shape corresponding to the round shape of the mount fastener 110, whereas the bore 196 utilized with an ovular mount fastener (e.g., mount fastener 510 in FIGs. 5B-5E, mount fastener 610 in FIGs. 6A and 6B, mount fastener 710 in FIG. 7, mount fastener 1210 in FIG. 12, mount fastener 1310 in FIG. 13) may have an ovular shape, cylindrical shape, and the like.

The mount fastener 110 may attach to the support structure 190 through any common manner, including but not limited to through a fastener (e.g., mechanical fasteners, arrowhead fasteners, fir-tree fasteners (aka, fir tree mounts, Christmas tree mounts), mounting edge clips, snap-fit connectors, snap-in fasteners, push mounts, push-in rivets, spring-arm connectors, clips, barbs, spring-loaded arms, twist-lock fasteners, barbed inserts, expanding plugs, stud mounts, screw mounts), masonry mounts, edge clip mounts, screw mounts, stud mounts, swivel mounts, adhesive mounts, and the like.

In FIGs. 1A and 1B, the fastener of the mount fastener 110 is a fir tree fastener. A fir tree fastener may include a stud portion 116 configured for insertion and receipt into the bore 196 through the first side 192 of the support structure 190. The stud portion may include a plurality of branches extending outwardly therefrom. The branches may be flexible branches configured for deforming (flexing) in a direction parallel to the direction of insertion (longitudinal insertion) of the stud portion into the bore 196 through the first side 192 of the support structure 190. In cases, a first portion of the branches may entirely pass through the bore 196 and spring back to engage the second side 194 of the support structure 190 to retain the fastener in the bore 196, while a second portion of the branches remain in a flexed position within the bore 196, providing for lateral support of the stud portion in the bore 196. In this way, the branches of the fixing 100 engage the bore 196, resulting in a pull-out force that resists withdrawal of the stud portion from the bore 196. In other aspects, the fastener may be another type of fastener, as described above.

The fixing 100 further includes the body section 130 that extends from the mount fastener 110. In the aspect illustrated in FIGs. 1A and 1B, the body section 130 includes a top side 132 opposite the bottom side 134. The body section 130 may be configured to contact the first side 192 of the support structure 190 when the mount fastener 110 is inserted into the bore 196 to limit the longitudinal insertion of the mount fastener 110 into the bore 196 and prevent the fixing 100 from being pushed completely through the bore 196. For example, as illustrated in FIGs. 1A and 1B, the body section 130 may include a head portion 136 that is configured as a stop that limits movement of the mount fastener 110 with respect to the longitudinal axis (L) of the mount fastener 110 (e.g., in the longitudinal direction). The head portion 136 may be an annular flange.

The head portion 136 of the body section 130 may include a spring section that includes a stabilizer (e.g., diaphragm spring, winged stabilizer, spring-less stabilizer) having a first end and a second end configured for engaging the first side 192 of the support structure 190 to limit the longitudinal insertion of the mount fastener 110 into the bore 196 (e.g., in the aspects illustrated in FIGs. 2A-4C, FIGs. 7-10D, FIG. 12, FIG. 13, and FIG. 14B). In aspects, the diaphragm spring is a spring that when compressed during insertion, on the first side 192 of the support structure 190, forces a set of branches (e.g., offset axially (staggered) branches, non-staggered branches) below the second side 194 of the support structure 190 surface to engage the surface below the support structure 190.

The body section 130 and the mount fastener 110 may be integrally formed through an injection molding process or another suitable process. In aspects, the object support 180 may also be integrally formed through an injection molding process or another suitable process with the body section 130 and/or the mount fastener 110.

The body section 130 may optionally include an object support 180 that is configured to attach to and/or support at least one component 50. A component may include one or more of a channel, panel, fixing, elongate article (e.g., wire, cable, hose, tubing, pipe, fiber optic cable, conduit, wire harness assembly), and the like. Two or more components may be bundled together into a bundle. In FIGs. 1A and 1B, the component 50 is illustrated as an elongated cable. The object support 180 may include one or more of a routing component, a clip, a toothed clip, a wire clip, a cable clip, a clamp, cable tie mounts, panel fasteners, a tape bar, a wire channel, saddle mounts, wire harness anchors, a self-affixing clip fastener (e.g., connector clip, bundling clip, harness clip, ratchet P-clamp, C-clip, docking clip, tubing clip, pipe clip, edge clip, routing clip, push pin, ratchet clamps, locking clamps), and the like. The object support 180 may also include a moment arm or other structure configured to space an attached component 50 apart from the body section 130. In aspects, a fixing 100 may not include an object support. For example, in FIGs. 2A-2D, 3A, 3B, 4A-4C, 7, and 14B the respective fixings do not include an illustrated object support.

In aspects, the object support 180 is a cable tie mount that includes an aperture (e.g., slot) that is configured to receive a fastener (e.g., flexible tie, cable tie) for connecting the fixing 100 to the component 50 (e.g., as described below regarding the fixings of FIGs. 5B-5E, 6A, and 6B). The fastener may be integrally formed with the object support 180 or may be a separate piece. In other aspects, another fastener may be utilized in lieu of a cable tie.

In aspects, the object support 180 is a mounting insert configured for receipt into an insert channel (e.g., the insert channel illustrated and described with respect to FIG. 60 of U.S. Patent No. 10,903,632, the disclosure of which is incorporated herein by reference) defined in a mounting attachment (not illustrated). The fixing aspects of FIGs. 8A-8D, FIGs. 9B-9D, and FIGs. 10B-10D, described below, include such a mounting insert configured for receipt into an insert channel.

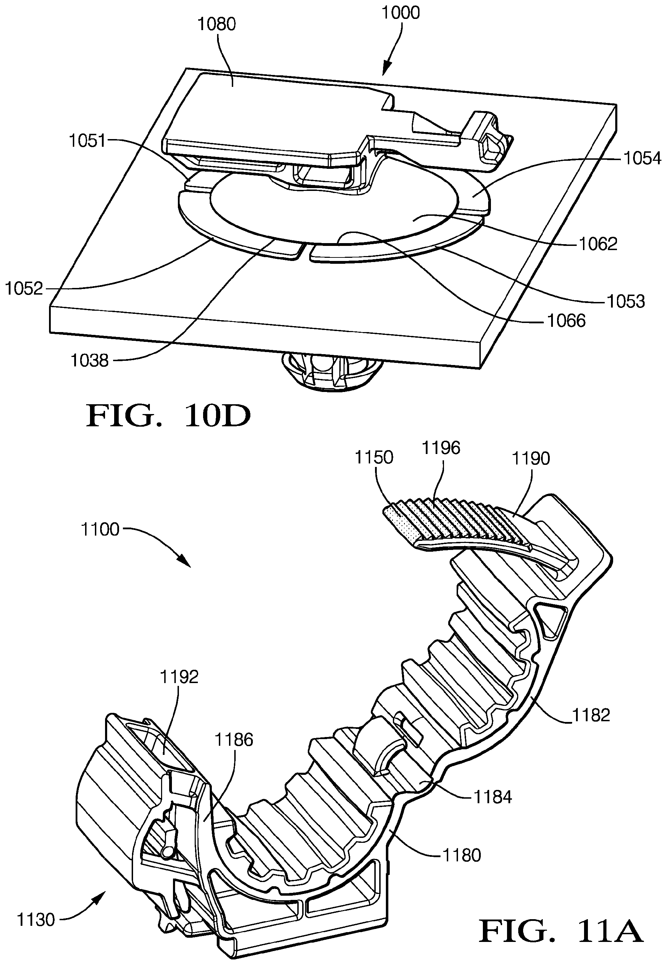

In aspects, the object support 180 is a clamp mounting attachment, which includes a first clamp member connected by a hinge mechanism to a second clamp member. The object support 180 further includes a lock mechanism for locking the first clamp member and the second clamp member together. For example, the lock mechanism may have an arcuate tongue and a corresponding slot opening having an engaging pawl. The arcuate tongue may be molded with a plurality of serrations, which extend along the length of the arcuate tongue and across the width of the arcuate tongue. The arcuate tongue is adapted to be received in the slot opening defined in the second clamp member. The engaging pawl may include teeth (not illustrated) thereon, which are configured to engage the serrations on the arcuate tongue when the arcuate tongue is inserted into the slot opening for retaining the component 50 (e.g., the fixing 1100 illustrated in FIGs. 11A and 11B).

In aspects, the object support 180 is a clamp mounting attachment, which includes a first clamp member connected by a hinge mechanism to a second clamp member. The object support 180 may further include a snap-fit lock mechanism having a cantilevered lug defined on the first clamp member and a corresponding connecting ledge defined on the second clamp member, the cantilevered lug adapted for snap-fit connection with the connecting ledge to retain the component 50 (e.g., the fixings (fixing 1200, fixing 1300) illustrated in FIGs. 12 and 13).

Referring back to FIGs. 1A and 1B, the fixing 100 includes at least one visual indicator 150 that is configured to provide a user with a visual cue that indicates an installation status of the fixing 100 (e.g., a complete installation status, an incomplete installation status). A complete installation status may include at least one of an indication that the fixing 100 is fully seated on a support structure (e.g., support structure 190), an indication that the fixing 100 is installed properly to the support structure 190, an indication that a component is fully seated to an object support (e.g., object support 180) of the fixing 100, an indication that the component is installed properly to the object support, and the like. An incomplete installation status may include at least one of an indication that the fixing 100 is not fully seated on the support structure, an indication that the fixing 100 is not installed properly to the support structure, an indication that a component is not fully seated to an object support of the fixing 100, an indication that the component is not installed properly to the object support, and the like.

The visual indicator 150 may be positioned on and/or relative to one or more of the mount fastener 110, the body section 130, or the support structure 190. The visual indicator 150 may be attached to the mount fastener 110 before the mount fastener 110 is inserted into the bore 196, with at least a portion of the visual indicator 150 received between the bottom side 134 of the body section 130 and the first side 192 of the support structure 190.

The visual indicator 150 may include a visual indicator surface, which may include one or more indicia (e.g., lines, symbols, numbers, letters, machine-readable codes (e.g., QR code, bar code), color, patterns, and the like). Indicia may be formed of paint, dye, coloring, markings, textures, and the like. The visual indicator 150 may include one or more colors (e.g., a high-resolution color, a reflective color, a color that glows under black light, etc.).

The visual appearance of the visual indicator 150 may vary based on the installation status of the fixing 100. The variable appearance of the visual indicator 150 may include a length of the visual indicator 150 that varies based on the installation status. In aspects, the variable appearance of the visual indicator 150 may include a length of the visual indicator 150 that varies based on the installation status (e.g., the fixing 200 illustrated in FIGs. 2A-2D, as described below).

The visual indicator 150 may include indicia dimensioned and configured such that the longitudinal insertion of the mount fastener 110 into the bore 196 as the fixing 100 is moved from an uninstalled position to an installed position causes the indicia to become sequentially visible within the slot such that one or more of the indicia are visible in all of a plurality of spaced spots when the fixing 100 is in its installed position, thereby providing the user with a visual cue that indicates the installation status of the fixing 100.

The visual indicator 150 may have an annular shape (e.g., a disk shape) that includes a first end opposite a second end and an open center defined therethrough. The open center may be sized to receive a portion of the mount fastener 110 therethrough. The open center may define the first end of the visual indicator 150. The visual indicator 150 may extend from the first end to the second end. The open center may define an inner diameter and the second end may define an outer diameter. The outer diameter may be greater than the inner diameter. For example, the visual indicators illustrated with respect to the fixings illustrated in FIGs. 5A-10D have an annular shape. In FIGs. 5A-7 and 10A-10D, the annular shape includes a frustoconical profile. The annular shape may include one or more folds (e.g., flutes, vertical ridges, pleats), as illustrated in the fixings of FIGs. 5A-5E, 6A, 6B, and 7 and discussed below. The annular shape may be configured to laterally compress and flatten out, for example when sandwiched between the bottom side 134 of the body section 130 and the first side 192 of the support structure 190. In this way, the visual indicator 150 may be configured as a compressible disk. The compressible disk may be configured for compression between the bottom side 134 of the body section 130 and the first side 192 of the support structure 190. In an aspect, the compressible disk has a first diameter in an uncompressed state and a second diameter in a compressed state, and the second diameter is greater than the first diameter.

The annular shape may include one or more posts, as illustrated in the fixing 800 of FIGs. 8A-8D and discussed below. The annular shape may include one or more flanges and spring arms, as illustrated in the fixing 900 of FIGs. 9A-9D and discussed below. The annular shape may include one or more flanges and radial notches, as illustrated in the fixing 1000 of FIGs. 10A-10D and discussed below.

The visual indicator 150 may be shaped as at least one elongated strip (e.g., a "label strip") that is attached to the mount fastener 110. For example, the elongated strip could attach at a fixed end to the distal end 114 of the mount fastener 110. In other aspects, the elongated strip could attach at another portion of the mount fastener 110. The visual indicator 150 may include at least one free end. Upon installation, a portion of the free end may extend outwards beyond an outer edge 138 of the body section 130 to be visible to the user. In this way, the fixing 100 provides the user with a visual cue that indicates the installation status of the fixing 100. In other aspects, none of the free end may extend outwards beyond the outer edge 138 of the body section 130, thereby providing the user with a visual cue that indicates the installation status of the fixing 100. An example of a fixing 200 with a visual indicator 250 shaped as at least one elongated strip is illustrated in FIGs. 2A-2D and is described in detail below.

FIG. 1A illustrates a first operation in an installation sequence and FIG. 1B illustrates a second operation in an installation sequence. In FIG. 1A, the mount fastener 110 is partially inserted into the support structure 190 and the visual indicator 150 is positioned between the top side 132 of the body section 130 and the first side 192 of the support structure 190. For example, the visual indicator 150 could include an orifice defined therethrough configured for receipt onto the mount fastener 110. In this position, as illustrated in FIG. 1A, the visual indicator 150 is not readily visible to the user. In FIG. 1B, the mount fastener 110 is inserted (e.g., fully inserted) into the support structure 190 and is in a seated installation status. In this configuration, the visual indicator 150 is in a compressed state where a portion of the visual indicator 150 is forced outwards beyond the outer edge 138 of the body section 130. In this position, the visual indicator 150 is visible to the user. In this way, the fixing 100 provides the user with a visual cue that indicates the installation status of the fixing 100. In this way, the visual indicator 150 may be configured as a compressible disk.

Referring now to FIGs. 2A-2D, the second example fixing 200 with the visual indicator 250 is illustrated. FIG. 2A is a perspective view of the fixing 200 in a first configuration, FIG. 2B is a perspective view of the fixing 200 in a second configuration, FIG. 2C is a perspective view of the fixing 200 that illustrates a first operation in an installation sequence, and FIG. 2D is a perspective view of the fixing 200 that illustrates a second operation in an installation sequence.

The fixing 200 is an aspect of the fixing 100. The fixing 200 is similar to the fixing 100 illustrated in FIGs. 1A and 1B and described above, except as detailed below. Thus, the fixing 200 includes a mount fastener 210, proximal end 212, distal end 214, body section 230, top side 232, bottom side 234, head portion 236, outer edge 238, and visual indicator 250. In the aspect illustrated, the fixing 200 does not include an object support. In other aspects, a fixing 200 may include an object support. The fixing 200 may be utilized with a support structure (e.g., the support structure 190 of FIGs. 1A and 1B, having the first side 192, second side 194, and bore 196).

The mount fastener 210 illustrated in FIGs. 2A-2D is circular and corresponds to the round shape of the bore 196. In other aspects, the mount fastener 210 may be ovular or another shape. The mount fastener 210 may attach to the support structure (e.g., support structure 190) through any common manner, including but not limited to through a fastener. In FIGs. 2A-2D, the fastener 210 is a fir tree fastener. In other aspects, the fastener 210 may be another type of fastener, as described above. As a fir tree fastener, the mount fastener 210 may include a stud portion 216 configured for insertion and receipt into the bore 196 through the first side 192 of the support structure 190. The stud portion 216 includes a plurality of branches 218 extending outwardly therefrom. The branches 218 may be flexible branches configured for deforming (flexing) in a direction parallel to the direction of insertion (longitudinal insertion) of the stud portion 216 into the bore 196 through the first side 192 of the support structure 190. In cases, a first portion of the branches 218 may entirely pass through the bore 196 and spring back to engage the second side 194 of the support structure 190 to retain the fixing 200 in the bore 196, while a second portion of the branches 218 remain in a flexed position within the bore 196, providing for lateral support of the stud portion 216 in the bore 196. In this way, the branches 218 of the fixing 200 engage the bore 196, resulting in a pull-out force that resists withdrawal of the stud portion 216 from the bore 196.

The head portion 236 of the body section 230 of the fixing 200 includes a spring section 260 that includes a stabilizer (e.g., diaphragm spring 262). The diaphragm spring 262 has a first end 264, a second end 266, an outside, and an inside 268. The second end 266 is configured for engaging the first side 192 of the support structure 190 to limit the longitudinal insertion of the mount fastener 210 into the bore 196.

In FIGs. 2A-2D, the visual indicator 250 is illustrated as at least one elongated strip 256 (e.g., a "label strip") that is attached to the mount fastener 210. For example, the elongated strip 256 could attach at least one fixed end (e.g., fixed end 254) to the distal end 214 of the mount fastener 210. In other aspects, the elongated strip 256 could attach at another portion of the mount fastener 210. The visual indicator 250 may include an identification tag (e.g., a label). The visual indicator 250 includes at least one free end (e.g., free end 252, free end 252'). FIG. 2A illustrates the visual indicator 250 flattened relative to the mount fastener 210, and FIG. 2B illustrates the visual indicator 250 bent upwards along a side of the mount fastener 210. In FIG. 2C, the distal end 214 of the stud portion 216 has been partially inserted into the bore 196 through the first side 192 of the support structure 190. FIG. 2D represents the mount fastener 210 having seated installation status relative to the support structure 190. In FIG. 2D, a portion of the free end 252 and/or free end 252' extends outwards beyond the outer edge 238 of the body section 230 and is visible to the user. In this way, the fixing 200 provides the user with a visual cue that indicates the installation status of the fixing 200. In other aspects, none of the free end 252 and/or free end 252' extends outwards beyond the outer edge 238 of the body section 230, thereby providing the user with a visual cue that indicates the installation status of the fixing 200.

The visual indicator 250 includes the elongated strip 256 having the at least one fixed end 254 extending to a free end (e.g., free end 252, free end 252') that defines a length therebetween. The elongated strip 256 may be attached at the fixed end 254 to the mount fastener 210. The elongated strip 256 is free at the free end (e.g., free end 252, free end 252') and is configured to extend out of the bore 196. The portion of the length that extends out of the bore 196 may indicate the installation status of the fixing 200 (e.g., the portion of the length that extends out of the bore 196 and outside of the outer edge 238). In aspects, the outer edge 238 may include a notch in the outer edge (e.g., as is illustrated as notch 940 and notch 942 in FIGs. 9B-9D).

The visual indicator 250 may be configured to be received between the bottom side 234 of the body section 230 and the first side 192 of the support structure 190. The visual indicator 250 may fold and bend when the mount fastener 210 is installed. The visual indicator 250 may attach to the mount fastener 210 before the mount fastener 210 is inserted into the bore 196, with at least a portion of the visual indicator 250 received between the bottom side 234 of the body section 230 and the first side 192 of the support structure 190. The visual indicator 250 may include a visual indicator surface, which may include one or more indicia (e.g., lines, symbols, colors, patterns, and the like). Indicia may be formed of paint, dye, coloring, markings, textures, and the like. The visual indicator 250 may include one or more colors (e.g., a high-resolution color, a reflective color, a color that glows under black light, etc.).

The visual appearance of the visual indicator 250 may vary based on the installation status of the fixing 200. For example, the variable appearance of the visual indicator 250 may include a length of the visual indicator 250 that varies based on the installation status. For example, in FIG. 2C, the visible portion of the visual indicator 250 is longer than the visible portion of the visual indicator 250 in FIG. 2D. In this way, the longer length of the visual indicator 250 indicates an incomplete installation status in FIG. 2C and the shorter length of the visual indicator 250 indicates a complete installation status (e.g., that the fixing is seated) in FIG. 2D.

Referring now to FIGs. 3A and 3B, a third example fixing 300 with a visual indicator is illustrated. FIG. 3A is a bottom perspective view of the fixing 300, illustrated uninstalled, and FIG. 3B is a top perspective view of the fixing 300, illustrated installed. The fixing 300 is an aspect of the fixing 100. The fixing 300 is similar to the first example fixing 100 illustrated in FIGs. 1A and 1B and described above, except as detailed below. Thus, the fixing 300 includes a mount fastener 310, proximal end 312, distal end 314, body section 330 having a top side 332 and a bottom side 334, head portion 336, outer edge 338, spring section 360, diaphragm spring 362, first end 364, second end 366, and visual indicator (e.g., visual indicator 370, visual indicator 372, visual indicator 374, visual indicator 376). In the aspect illustrated, the fixing 300 does not include an object support. In other aspects, a fixing 300 may include an object support.

The fixing 300 may be utilized with a support structure 190 having a first side 192, second side 194, and bore 196. The mount fastener 310 in FIGs. 3A and 3B is circular and corresponds to the round shape of the bore 196. In other aspects, the mount fastener 310 may be ovular or another shape. The mount fastener 310 may attach to the support structure 190 through any common manner, including but not limited to through a fastener. In FIGs. 3A and 3B, the mount fastener 310 is a fir tree fastener, which is described above regarding the mount fastener 210. In other aspects, the mount fastener 310 may be another type of fastener.

In FIGs. 3A and 3B, the visual indicator includes at least one rupturable paint dot (e.g., paint dot 350, paint dot 352, paint dot 354, paint dot 356), which may be disposed on the bottom side 334 of the body section 330. The paint dot is configured to break upon impact with an object and in response emit an indica material onto a surface (e.g., outside of a periphery of the body section 330).

Indicia material may be formed of paint, dye, coloring, markings, textures, and the like. The visual indicator may include one or more colors, for example, a high-resolution color, a reflective color, a color that glows under black light, etc. In aspects, the indicia material is a flowable (e.g., liquid, gel) paint or dye encased in an outer shell made of a rupturable material (e.g., gelatin). The paint dot is configured to be received between the bottom side 334 of the body section 330 and the first side 192 of the support structure 190. When the mount fastener 310 is inserted (e.g., fully inserted) into the bore 196, the paint dot is compressed against the first side 192 of the support structure 190, causing the paint dot to rupture and the indicia material to flow from the paint dot as a visual indicator (e.g., visual indicator 370, visual indicator 372, visual indicator 374, visual indicator 376) that seeps out from under a second end 366 and is visible to the user, providing the user with a visual cue that indicates the installation status of the fixing (e.g., indicates a complete installation status where the fixing 300 is seated on the support structure 190), as is illustrated in FIG. 3B.

Referring now to FIGs. 4A-4C, a fourth example fixing 400 with a visual indicator is illustrated. FIG. 4A is a bottom perspective view of the fixing 400 (illustrated uninstalled), FIG. 4B is a top perspective view of the fixing 400 (illustrated installed), and FIG. 4C is a top perspective view of the fixing 400 (illustrated installed). The fixing 400 is an aspect of the fixing 100. The fixing 400 is similar to the first example fixing 100 illustrated in FIGs. 3A and 3B and described above, except as detailed below. Thus, the fixing 400 includes a mount fastener 410, proximal end 412, distal end 414, body section 430, top side 432, bottom side 434, head portion 436, outer edge 438, and visual indicator (e.g., visual indicator 470, visual indicator 472, visual indicator 474, visual indicator 476). In the aspect illustrated, the fixing 400 does not include an object support. In other aspects, a fixing 400 may include an object support.

The fixing 400 may be utilized with a support structure 190, having a first side 192, second side 194, and bore 196. The mount fastener 410 in FIGs. 4A-4C is circular and corresponds to the round shape of the bore 196. In other aspects, the mount fastener 410 may be ovular or another shape. The mount fastener 410 may attach to the support structure 190 through any common manner, including but not limited to through a fastener. In FIGs. 4A-4C, the fastener 410 is illustrated as a fir tree fastener, as is described above regarding the mount fastener 210. In other aspects, the fastener 410 may be another type of fastener, as described above.

The head portion 436 of the body section 430 of the fixing 400 includes a spring section 460 that includes a stabilizer (e.g., diaphragm spring 462). The diaphragm spring 462 has a first end 464 and a second end 466. The second end 466 is configured for engaging the first side 192 of the support structure 190 to limit the longitudinal insertion of the mount fastener 410 into the bore 196.

In FIGs. 4A-4C, the visual indicator includes at least one rupturable paint dot (e.g., paint dot 450, paint dot 452, paint dot 454) disposed on the bottom side 434 of the body section 430. The paint dot(s) are positioned on the bottom side 434 adjacent to at least one conduit (e.g., aperture 440, aperture 442, aperture 444, aperture 446) defined in the head portion 436 (e.g., defined through the head portion 436). The paint dot is configured to break upon impact with an object and in response emit an indica material through the conduit and onto an outer side (e.g., top side 432) of the body section 430. In aspects, the indicia material is a flowable (e.g., liquid, gel) paint or dye encased in an outer shell made of a rupturable material (e.g., gelatin). The visual indicator may include one or more colors (e.g., a high-resolution color, a reflective color, a color that glows under black light, etc.). The paint dot is configured to be received between the bottom side 434 of the body section 430 and the first side 192 of the support structure 190. When the mount fastener 410 is inserted (e.g., fully inserted) into the bore 196, the paint dot is compressed against the first side 192 of the support structure 190, causing the paint dot to rupture and the indicia material to flow from the paint dot as a visual indicator (e.g., visual indicator 470, visual indicator 472, visual indicator 474, visual indicator 476) that seeps out from the conduit and is visible to the user, providing the user with a visual cue that indicates an installation status of the fixing 400 (e.g., a complete installation status that confirms that the fixing 400 is seated on the support structure 190), as is illustrated in FIG. 4C.

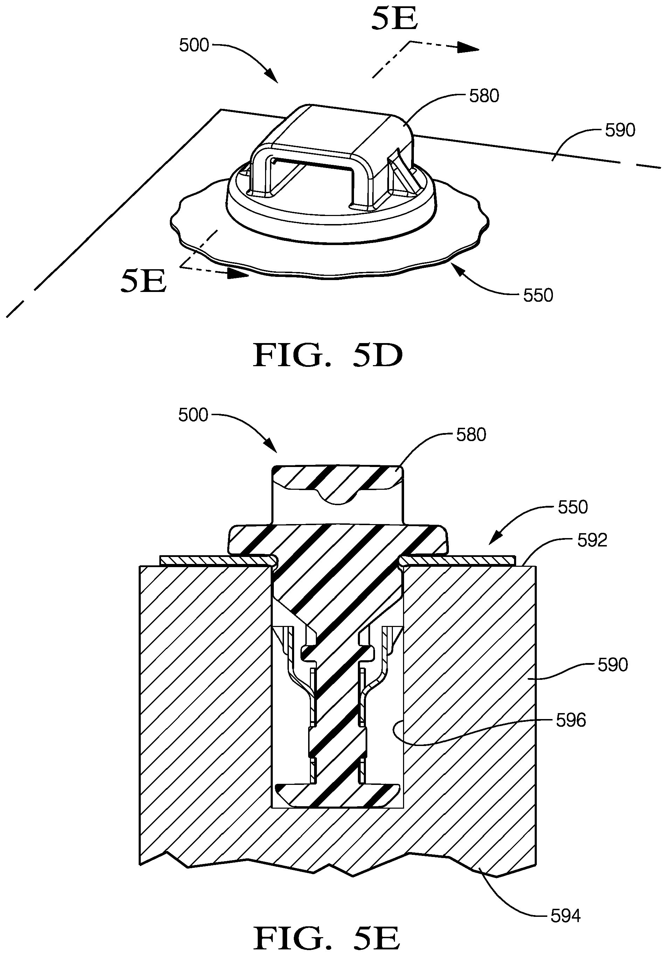

Referring now to FIGs. 5A-5E, a fifth example fixing 500 with a visual indicator is illustrated. FIG. 5A is a top perspective view of a visual indicator 550 of the fixing 500, FIG. 5B is a cross-sectional view of the fixing 500 along lines 5B-5B in FIG. 5C (illustrated uninstalled), FIG. 5C is a top perspective view of the fixing 500 (illustrated uninstalled), FIG. 5D is a top perspective view of the fixing 500 (illustrated installed), and FIG. 5E is a cross-sectional view of the fixing 500 along lines 5E-5E (illustrated installed). The fixing 500 is an aspect of the fixing 100. The fixing 500 is similar to the first example fixing 100 illustrated in FIGs. 1A and 1B and described above, except as detailed below. Thus, the fixing 500 includes a mount fastener 510, a proximal end 512, a distal end 514, a body section 530, a top side 532, a bottom side 534, a head portion 536, an outer edge 538, the visual indicator 550, and an object support 580. In aspects, the head portion 536 of the body section 530 may include a spring section that includes a stabilizer (e.g., diaphragm spring, winged stabilizer, spring-less stabilizer) having a first end and a second end configured for engaging a first side 592 of a support structure 590 to limit longitudinal insertion of the mount fastener 510 into a bore 596.

In FIG. 5E, the fixing 500 is illustrated configured for attachment with the support structure 590 that includes a boss with at least one internal wall that defines the bore 596. In the aspect illustrated in FIGs. 5B-5E, the bore 596 is a circular reentrant bore (aka a "blind hole"). The mount fastener 510 in FIGs. 5B-5E is ovular and corresponds to an oval shape of the bore 596. In other aspects, the mount fastener 510 may be circular or another shape. The support structure 590 includes the first side 592 and a second side 594.

The visual indicator 550 may have an annular shape (e.g., a disk shape, a fluted disk shape, fluted-concave disk shape) that includes a first side 552 opposite a second side 554 and an open center 556 defined therethrough. The open center 556 may be sized to receive a portion of the mount fastener 510 therethrough. The open center 556 may define a first end 558 of the visual indicator 550. The visual indicator 550 may extend from the first end 558 to a second end 559. The open center 556 may define an inner diameter and the second end 559 may define an outer diameter. The outer diameter may be greater than the inner diameter. The annular shape may include a frustoconical profile. The annular shape may include one or more folds 557 (e.g., flutes, vertical ridges, pleats). In FIGs. 5B and 5C, the open center 556 is positioned adjacent to the head portion 536.

The annular shape may be configured to laterally compress and flatten out, for example when sandwiched between the bottom side 534 of the body section 530 and the first side 592 of the support structure 590, as illustrated in FIG. 5E. In this way, the visual indicator 550 may be configured as a compressible disk. The compressible disk may be configured for compression between the bottom side 534 of the body section 530 and the first side 592 of the support structure 590. In an aspect, the compressible disk has a first diameter in an uncompressed state and a second diameter in a compressed state, and the second diameter is greater than the first diameter.

The visual indicator 550 is configured to provide a user with a visual cue that indicates an installation status of the fixing 500. In FIGs. 5B and 5C, a frustoconical profile shape of the visual indicator 550 indicates an installation status of the fixing 500 of unseated (e.g., an incomplete installation status), whereas, in FIGs. 5D and 5E, the visual indicator 550 extending past the outer edge 538 indicates an installation status of the fixing 500 of seated (e.g., a complete installation status). The visual indicator 550 may include a visual indicator surface, which may include one or more indicia (e.g., lines, symbols, colors, patterns, and the like). Indicia may be formed of paint, dye, coloring, markings, textures, and the like. The visual indicator 550 may include one or more colors (e.g., a high-resolution color, a reflective color, a color that glows under black light, etc.).

The mount fastener 510 may attach to the support structure 590 through any common manner, including but not limited to through a fastener. In FIGs. 5A-5EC, the mount fastener 510 is illustrated as a blind hole mount fastener 560. In other aspects, the mount fastener 510 may be another type of fastener, as described above. The blind hole mount fastener 560 may be used where the bore 596 is a blind hole. The blind hole mount fastener 560 may include a mount member 562 and a clip member 568. The mount member 562 includes a head portion 564 and a stud portion 566 that extends downwardly from the head portion 564. The clip member 568 is configured to be affixed to the stud portion 566. The clip member 568 includes at least one spring arm 570 including a tooth 572 configured to engage the bore 596.

In FIGs. 5B-5E, the object support 580 illustrated is a cable tie mount that includes an aperture (e.g., slot 582) that is configured to receive a fastener (e.g., flexible tie, cable tie 588) for connecting the fixing 500 to the component 50. The cable tie 588 is illustrated in dotted-line fashion as securing the component 50 to the object support 580. The cable tie 588 may be integrally formed with the object support 580 or may be separate therefrom. Another fastener may be utilized in lieu of a cable tie. In other aspects, a fixing 500 may not include an object support. The cable tie 588 may include a strap (e.g., tie tail) and a tie head. The cable tie 588 may be used to wrap and secure a bundle and may be used to secure the bundle to the object support 580. In other aspects, the fixing 500 may not include an object support.

Referring now to FIGs. 6A and 6B, a sixth example fixing 600 with a visual indicator is illustrated. The fixing 600 is an aspect of the fixing 100. In these figures, the fixing 600 illustrated is the same fixing as the fixing 500, with the visual indicator 550 flipped one-hundred eighty (180) degrees and the open center 556 positioned distal the head portion 536. In this way, FIG. 6A is a cross-sectional view of the fixing of FIG. 5B in an alternate position (illustrated uninstalled) and FIG. 6B is a bottom perspective view of the fixing of FIG. 5B in an alternate position (illustrated uninstalled).

Referring now to FIG. 7, a seventh example fixing 700 with a visual indicator 750 is illustrated. FIG. 7 is a bottom perspective view of an alternate configuration of a fixing. The fixing 700 is similar to the first example fixing 100 illustrated in FIGs. 1A and 1B and described above, except as detailed below. The fixing 700 is an aspect of the fixing 100. The fixing 700 is also similar to the fifth example fixing 500 illustrated in FIGs. 5A-6B and described above, except as detailed below. Thus, the fixing 700 includes a mount fastener 710, a body section 730, a head portion 736, an outer edge 738, and the visual indicator 750. In the aspect illustrated, the fixing 700 does not include an object support. In other aspects, a fixing 700 may include an object support. The mount fastener 710 may attach to the support structure 190 through any common manner, including but not limited to through a fastener. In FIG. 7, the mount fastener 710 is a fir tree fastener, as is described above regarding the mount fastener 210. In other aspects, the mount fastener 710 may be another type of fastener, as described above. The head portion 736 of the body section 730 of the fixing 700 includes a spring section 760 that includes a stabilizer (e.g., diaphragm spring 762). The mount fastener 710 in FIG. 7 is ovular shaped and corresponds to an oval shape of a bore (not illustrated). In other aspects, the mount fastener 710 may be circular or another shape.

Referring now to FIGs. 8A-8D, an eighth example fixing 800 with a visual indicator 850 is illustrated. FIG. 8A is a top perspective view of the visual indicator 850 of the fixing 800, FIG. 8B is a top perspective view of the fixing 800 (illustrated uninstalled), FIG. 8C is a partial, top perspective view of the fixing 800 (illustrated installed), and FIG. 8D is a cross-sectional view of the fixing 800 along lines 8D-8D in FIG. 8C (illustrated installed). The fixing 800 is an aspect of the fixing 100. The fixing 800 is similar to the first example fixing 100 illustrated in FIGs. 1A and 1B and described above, except as detailed below. Thus, the fixing 800 includes a mount fastener 810 having a proximal end 812 and a distal end 814, a body section 830 having a top side 832 and a bottom side 834, a head portion 836, an outer edge 838, the visual indicator 850, and an object support 880. The fixing 800 may be utilized with a support structure (e.g., the support structure 190 of FIGs. 1A and 1B, having the first side 192, second side 194, and bore 196). In other aspects, a fixing 800 may not include an object support.

The mount fastener 810 may attach to the support structure 190 through any common manner, including but not limited to through a fastener. In FIGs. 8B-8D, the fastener 810 is a fir tree fastener, as is described above regarding the mount fastener 210. In other aspects, the fastener 810 may be another type of fastener, as described above. The mount fastener 810 in FIGs. 8B-8D is circular and corresponds to the round shape of the bore 196. In other aspects, the mount fastener 810 may be ovular or another shape.

The head portion 836 of the body section 830 of the fixing 800 includes a spring section 860 that includes a stabilizer (e.g., diaphragm spring 862). The diaphragm spring 862 has a second end 866. The second end 866 is configured for engaging the first side 192 of the support structure 190 to limit longitudinal insertion of the mount fastener 810 into the bore 196.

The visual indicator 850 may have an annular shape (e.g., a disk shape) that includes a first side 851 opposite a second side 853 and an open center 858 defined therethrough. The open center 858 may be sized to receive a portion of the mount fastener 810 therethrough, as illustrated in FIGs. 8B-8D. The open center 858 may define the first end of the visual indicator 850. The visual indicator 850 may extend from a first end to a second end 855. The open center 858 may define an inner diameter and the second end 855 may define an outer diameter. The outer diameter may be greater than the inner diameter. The object support 880 illustrated is a mounting insert configured for receipt into an insert channel defined in a mounting attachment (not illustrated) (e.g., the insert channel illustrated and described with respect to FIG. 60 of U.S. Patent No. 10,903,632, as described above). In other aspects, a different object support may be utilized.

The visual indicator 850 in this aspect includes a disk 856 having at least one pin (e.g., pin 852, pin 854) extending therefrom. The pins (e.g., pin 852, pin 854) are configured to be received through a corresponding hole (e.g., hole 840, hole 842) defined through the head portion 836. When the fixing 800 is installed in the bore 196, the bottom side 834 of the body section 830 contacts the first side 192 of the support structure 190, and the pin (e.g., pin 852, pin 854) extends through the hole (e.g., hole 840, hole 842) defined through the head portion 836, providing a visual indication to a user that provides the user with a visual cue that indicates an installation status of the fixing (e.g., a complete installation status that confirms installation of the fixing 800). The visual indicator 850 may include a visual indicator surface, which may include one or more indicia (e.g., lines, symbols, colors, patterns, and the like). Indicia may be formed of paint, dye, coloring, markings, textures, and the like. The visual indicator 850 may include one or more colors (e.g., a high-resolution color, a reflective color, a color that glows under black light, etc.).

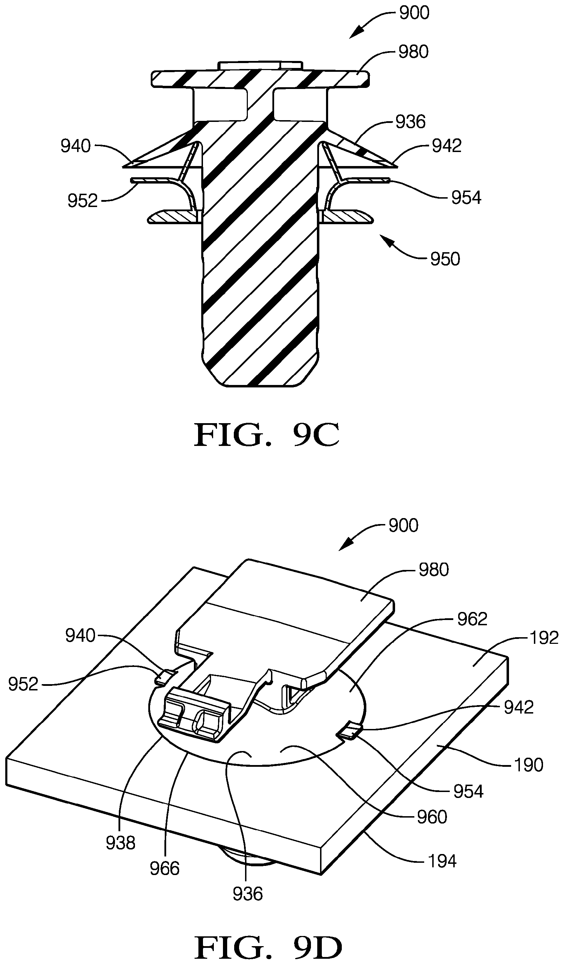

Referring now to FIGs. 9A-9D, a ninth example fixing 900 with a visual indicator 950 is illustrated. FIG. 9A is a top perspective view of the visual indicator 950, FIG. 9B is a side perspective view of the fixing 900 (illustrated uninstalled), FIG. 9C is a cross-sectional view of the fixing 900 along lines 9C-9C in FIG. 9B (illustrated uninstalled), and FIG. 9D is a top perspective view of the fixing 900 (illustrated installed). The fixing 900 is an aspect of the fixing 100. The fixing 900 is similar to the fixing 800 illustrated in FIGs. 8A-8D described above, except as detailed below. Thus, the fixing 900 includes a mount fastener 910 having a proximal end and a distal end, a body section 930 having a top side and a bottom side 934, a head portion 936, an outer edge 938, the visual indicator 950, and an object support 980. The fixing 900 may be utilized with a support structure (e.g., the support structure 190 of FIGs. 1A and 1B, having the first side 192, second side 194, and bore 196). In other aspects, a fixing 900 may not include an object support.

The mount fastener 910 may attach to the support structure 190 through any common manner, including but not limited to through a fastener. In FIGs. 9B-9D, the mount fastener 910 is a fir tree fastener, as is described above regarding the mount fastener 210. In other aspects, the mount fastener 910 may be another type of fastener, as described above. The mount fastener 910 in FIGs. 9B-9D is circular and corresponds to the round shape of the bore 196. In other aspects, the mount fastener 910 may be ovular or another shape. The head portion 936 of the body section 930 of the fixing 900 includes a spring section 960 that includes a stabilizer (e.g., diaphragm spring 962). The diaphragm spring 962 has a second end 966. The second end 966 is configured for engaging the first side 192 of the support structure 190 to limit longitudinal insertion of the mount fastener 910 into the bore 196.

The visual indicator 950 may have an annular shape (e.g., a disk shape) that includes a first side 944 opposite a second side 946 and an open center 958 defined therethrough. The open center 958 may be sized to receive a portion of the mount fastener 910 therethrough, as illustrated in FIGs. 9B-9D. The open center 958 may define a first end of the visual indicator 950. The visual indicator 950 may extend from the first end to a second end 948. The open center 958 may define an inner diameter and the second end 948 may define an outer diameter. The outer diameter may be greater than the inner diameter. The object support 980 illustrated is a mounting insert configured for receipt into an insert channel defined in a mounting attachment (not illustrated) (e.g., the insert channel illustrated and described with respect to FIG. 60 of U.S. Patent No. 10,903,632, as described above). In other aspects, a different object support may be utilized.

The visual indicator 950 in this aspect includes a disk 956 having at least one flange (e.g., flange 952, flange 954) extending therefrom. The flange (e.g., flange 952, flange 954) is configured to be received through a corresponding notch (e.g., notch 940, notch 942) defined through the head portion 936. When the fixing 900 is installed in the bore 196, the bottom side 934 of the body section 930 contacts the first side 192 of the support structure 190, and the flange (e.g., flange 952, flange 954) extends through the notch (e.g., notch 940, notch 942) defined through the head portion 936, providing a visual cue to a user that indicates an installation status of the fixing 900 (e.g., a complete installation status). In the aspect illustrated in FIGs. 9A-9D, the flange (e.g., flange 952, flange 954) extends from an upper side of the disk 956 and includes a spring arm (e.g., spring arm 953, spring arm 955), which is configured to contact the bottom side 934 of the body section 930 and deflect to cause a tip of the flange (e.g., flange 952, flange 954) to extend from the notch (e.g., notch 940, notch 942), as illustrated in FIG. 9D. The positioning of the tip of the flange relative to the notch may indicate the installation status of the fixing 900.

The visual indicator 950 may include a visual indicator surface, which may include one or more indicia (e.g., lines, symbols, colors, patterns, and the like). Indicia may be formed of paint, dye, coloring, markings, textures, and the like. The visual indicator 950 may include one or more colors (e.g., a high-resolution color, a reflective color, a color that glows under black light, etc.).

Referring now to FIGs. 10A-10D, a tenth example fixing 1000 with a visual indicator 1050 is illustrated. FIG. 10A is a top perspective view of the visual indicator 1050 of the fixing 1000, FIG. 10B is a side perspective view of the fixing 1000 (illustrated uninstalled), FIG. 10C is a cross-sectional view of the fixing 1000 along lines 10C-10C in FIG. 10B (illustrated uninstalled), and FIG. 10D is a top perspective view of the fixing 1000 (illustrated installed). The fixing 1000 is an aspect of the fixing 100. The fixing 1000 is similar to the fixing 800 illustrated in FIGs. 8A-8D described above, except as detailed below. Thus, the fixing 1000 includes a mount fastener 1010 having a proximal end and a distal end, a body section 1030 having a top side and a bottom side 1034, a head portion 1036, an outer edge 1038, the visual indicator 1050, and an object support 1080. The fixing 1000 may be utilized with a support structure (e.g., the support structure 190 of FIGs. 1A and 1B, having the first side 192, second side 194, and bore 196). In other aspects, a fixing 1000 may not include an object support.

The mount fastener 1010 may attach to the support structure 190 through any common manner, including but not limited to through a fastener. In FIGs. 10B-10D, the mount fastener 1010 is a fir tree fastener, as is described above regarding the mount fastener 210. In other aspects, the mount fastener 1010 may be another type of fastener, as described above. The mount fastener 1010 in FIGs. 10B-10D is circular and corresponds to the round shape of the bore 196. In other aspects, the mount fastener 1010 may be ovular or another shape. The head portion 1036 of the body section 1030 of the fixing 1000 includes a spring section 1060 that includes a stabilizer (e.g., diaphragm spring 1062). The diaphragm spring 1062 has a second end 1066. The second end 1066 is configured for engaging the first side 192 of the support structure 190 to limit longitudinal insertion of the mount fastener 1010 into the bore 196. The object support 1080 illustrated is a mounting insert configured for receipt into an insert channel defined in a mounting attachment (not illustrated) (e.g., the insert channel illustrated and described with respect to FIG. 60 of U.S. Patent No. 10,903,632, as described above). In other aspects, a different object support may be utilized.

The visual indicator 1050 in this aspect has an annular shape (e.g., a disk shape) that includes a first side 1002 opposite a second side 1004 and an open center 1058 defined therethrough. The open center 1058 is configured to receive the mount fastener 1010 therethrough, as illustrated in FIGs. 10B-10D. The open center 1058 is located at a first end of the visual indicator 1050, with the visual indicator 1050 extending from the open center 1058 (e.g., the first end) to a second end 1006. The open center 1058 may define an inner diameter and the second end 1006 may define an outer diameter. The outer diameter may be greater than the inner diameter. The annular shape may include a frustoconical profile. The visual indicator 1050 may include a visual indicator surface, which may include one or more indicia (e.g., lines, symbols, colors, patterns, and the like). Indicia may be formed of paint, dye, coloring, markings, textures, and the like. The visual indicator 1050 may include one or more colors (e.g., a high-resolution color, a reflective color, a color that glows under black light, etc.).

In the aspect illustrated in FIGs. 10A-10D, the visual indicator 1050 is a disk 1040 (e.g., a compressible disk) is divided into at least one flange (e.g., flange 1051, flange 1052, flange 1053, flange 1054) by at least one notch (e.g., notch 1055, notch 1056, notch 1057, notch 1059). The flanges may be oriented radially with respect to the open center 1058 as one or more radial flanges. A notch may be separated by two adjacent flanges and may extend inwards (e.g., radially inwards) from the second end 1006 towards the open center 1058. A notch may be radially oriented relative to the center of the open center 1058 as a radially extending notch. A pair of notches may define a flange (e.g., radial segment) therebetween. The disk 1040 may be a compressible disk that includes at least one radially extending notch defined therein that defines at least one radial flange (e.g., radial segment) in the compressible disk. A radial flange may have a non-planar shape configured to flatten when the compressible disk is compressed between the bottom side 1034 of the body section 1030 and the first side 192 of the support structure 190. In the aspect illustrated in FIGs. 10A-10C, the disk 1040 has a frustoconical shape.

The disk 1040 is configured to, for example when sandwiched between the bottom side 134 of the body section 130 and the first side 192 of the support structure 190, as is illustrated in FIG. 10D, provide a user with a visual cue that indicates an installation status of the fixing 1000 (e.g., a complete installation status, an incomplete installation status). When the fixing 1000 is fully installed in the bore 196, the bottom side 1034 of the body section 1030 contacts the first side 192 of the support structure 190, and the disk 1040 laterally compresses and flattens out, as is illustrated in FIG. 10D. In this configuration, the flange(s) (e.g., flange 1051, flange 1052, flange 1053, flange 1054) extend outwards beyond the second end 1066 and provide a visual indication to a user that confirms installation of the fixing 1000.

In this way, the disk 1040 that includes the visual indicator 1050 may be configured as a compressible disk. The compressible disk may be configured for compression between the bottom side 1034 of the body section 1030 and the first side 192 of the support structure 190. In an aspect, the compressible disk has a first diameter in an uncompressed state and a second diameter in a compressed state, and the second diameter is greater than the first diameter.

Referring now to FIGs. 11A and 11B, an eleventh example fixing 1100 with a visual indicator 1150 is illustrated. The fixing 1100 is an aspect of the fixing 100. The fixing 1100 is similar to the first example fixing 100 illustrated in FIGs. 1A and 1B and described above, except as detailed below. Thus, the fixing 1100 includes a body section 1130, the visual indicator 1150, and an object support 1180. In other aspects, a fixing 1100 may not include an object support. The fixing 1100 may be utilized with a support structure (e.g., the support structure 190 of FIGs. 1A and 1B, having the first side 192, second side 194, and bore 196).

In FIGs. 11A and 11B, the object support 1180 illustrated is a clamp mounting attachment, which includes a first clamp member 1182 connected by a hinge mechanism 1184 to a second clamp member 1186. The object support 1180 further includes a lock mechanism 1188 having an arcuate tongue 1190 and a corresponding slot opening 1192 having an engaging pawl (not illustrated). The arcuate tongue 1190 may be molded with a plurality of serrations 1196, which extend along the length of the arcuate tongue 1190 and across the width of the arcuate tongue 1190. The arcuate tongue 1190 is adapted to be received in the slot opening 1192 defined in the second clamp member 1186. The engaging pawl may include teeth (not illustrated) thereon, which are configured to engage the serrations 1196 on the arcuate tongue 1190 when the arcuate tongue 1190 is inserted into the slot opening 1192 for retaining the component 50.

FIG. 11A is a top perspective view of the fixing 1100, illustrated in an open configuration that is ready to receive the component. FIG. 11B is a top perspective view of the fixing 1100, illustrated in a closed configuration that retains a component 1102 (e.g., a cable, a bundle) therein. The visual indicator 1150 may be defined on the arcuate tongue 1190, for example on one or more of the serrations 1196. The visual indicator 1150 may include a visual indicator surface, which may include one or more indicia (e.g., lines, symbols, colors, patterns, and the like). Indicia may be formed of paint, dye, coloring, markings, textures, and the like. The visual indicator 1150 may include one or more colors (e.g., a high-resolution color, a reflective color, a color that glows under black light, etc.). In FIG. 11B, the arcuate tongue 1190 has been inserted into the corresponding slot opening 1192 and the visual indicator 1150 is obscured, thereby providing a visual indication to a user that confirms installation of the fixing 1100 (e.g., installation of the object support 1180 of the fixing 1100 on the component 1102).

Referring now to FIG. 12, a twelfth example fixing 1200 with a visual indicator is illustrated. FIG. 12 is a top perspective view of the fixing 1200, illustrated uninstalled. The fixing 1200 is an aspect of the fixing 100. The fixing 1200 is similar to the example fixing 1100 illustrated in FIGs. 11A and 11B and described above and is similar to the example fixing 100 illustrated in FIGs. 1A and 1B and described above, except as detailed below. Thus, the fixing 1200 includes a mount fastener 1210, a body section 1230, a visual indicator (e.g., visual indicator 1250, visual indicator 1250', visual indicator 1250''), and an object support 1280. In other aspects, a fixing 1200 may not include an object support. The fixing 1200 may be utilized with a support structure (e.g., the support structure 190 of FIGs. 1A and 1B, having the first side 192, second side 194, and bore 196).

The mount fastener 1210 may attach to the support structure 190 through any common manner, including but not limited to through a fastener. In FIG. 12, the mount fastener 1210 is a fir tree fastener, as is described above regarding the mount fastener 210. In other aspects, the mount fastener 1210 may be another type of fastener, as described above. The mount fastener 1210 in FIG. 12 is ovular shaped and corresponds to the oval shape of the bore 196. In other aspects, the mount fastener 1210 may be circular or another shape.

In FIG. 12, the object support 1280 illustrated is a clamp mounting attachment, which includes a first clamp member 1282 connected by a hinge mechanism 1284 to a second clamp member 1286. The object support 1280 further includes a snap-fit lock mechanism having a cantilevered lug 1290 defined on the first clamp member 1282 and a corresponding connecting ledge 1292 defined on the second clamp member 1286, the cantilevered lug 1290 adapted for snap-fit connection with the connecting ledge 1292 to retain the component 50. The fixing 1200 is illustrated in an open configuration that is ready to receive a component. The visual indicator 1250 may be defined on one or more inside surfaces of one or both of the first clamp member 1282 or the second clamp member 1286. The visual indicator 1250 may include a visual indicator surface, which may include one or more indicia (e.g., lines, symbols, colors, patterns, and the like). Indicia may be formed of paint, dye, coloring, markings, textures, and the like. The visual indicator 1250 may include one or more colors (e.g., a high-resolution color, a reflective color, a color that glows under black light, etc.). As is illustrated in the aspect of the fixing 1100 in FIG. 11B, the obfuscation of the visual indicator 1250 by a component held in the object support 1280 provides a visual indication to a user that confirms installation of the fixing 1200 (e.g., installation of the object support 1280 of the fixing 1200 on the component).

Referring now to FIG. 13, the thirteenth example fixing 1300 with a visual indicator 1350 is illustrated. FIG. 13 is a top perspective view of the fixing 1300, illustrated uninstalled. The fixing 1300 is an aspect of the fixing 100. The fixing 1300 is similar to the fixing 1200 illustrated in FIG. 12 and described above, except as detailed below. Thus, the fixing 1300 includes a mount fastener 1310, a body section 1330, the visual indicator 1350, and an object support 1380. In other aspects, a fixing 1300 may not include an object support. The fixing 1300 may be utilized with a support structure, (e.g., the support structure 190 of FIGs. 1A and 1B, having the first side 192, second side 194, and bore 196).

In FIG. 13, the object support 1380 illustrated is a clamp mounting attachment, which includes a first clamp member 1382 connected by a hinge mechanism 1384 to a second clamp member 1386. The object support 1380 further includes a snap-fit lock mechanism having a cantilevered lug 1390 defined on the first clamp member 1382 and a corresponding connecting ledge 1392 defined on the second clamp member 1386, the cantilevered lug 1390 adapted for snap-fit connection with the connecting ledge 1392 to retain the component 50. The fixing 1300 is illustrated in an open configuration that is ready to receive a component.

The mount fastener 1310 may attach to the support structure 190 through any common manner, including but not limited to through a fastener. In FIG. 13, the mount fastener 1310 is a fir tree fastener, as is described above regarding the mount fastener 210. In other aspects, the mount fastener 1310 may be another type of fastener, as described above. The mount fastener 1310 in FIG. 13 is ovular and corresponds to the oval shape of the bore 196. In other aspects, the mount fastener 1310 may be circular or another shape.

The visual indicator 1350 may be defined on one or more surfaces of the mount fastener 1310. The visual indicator 1350 may include a visual indicator surface, which may include one or more indicia (e.g., lines, symbols, colors, patterns, and the like). Indicia may be formed of paint, dye, coloring, markings, textures, and the like. The visual indicator 1350 may include one or more colors (e.g., a high-resolution color, a reflective color, a color that glows under black light, etc.).

In FIG. 13, the visual indicator 1350 is illustrated as indicia applied to one or more surfaces of the mount fastener 1310. Installation of the mount fastener 1310 into the bore 196 may cause the obfuscation of the visual indicator 1350, thereby providing a visual indication to a user that confirms installation of the fixing 1300 (e.g., installation of the object support 1380 of the fixing 1300 on the component). The visual indicator 1350 may include a visual indicator surface, which may include one or more indicia (e.g., lines, symbols, colors, patterns, and the like). Indicia may be formed of paint, dye, coloring, markings, textures, and the like. The visual indicator 1350 may include one or more colors (e.g., a high-resolution color, a reflective color, a color that glows under black light, etc.). In aspects, the visual indicator 1350 is a decorative coating.

Referring now to FIGs. 14A and 14B, a fourteenth example fixing 1400 with a visual indicator 1456 is illustrated. FIG. 14A is a top perspective view of a label 1450 including the visual indicator 1456, and FIG. 14B is a side perspective view of the fixing 1400, illustrated uninstalled. The fixing 1400 is an aspect of the fixing 100. The fixing 1400 is similar to the first example fixing 100 illustrated in FIGs. 1A and 1B and described above, except as detailed below. Thus, the fixing 1400 includes a mount fastener 1410, a body section 1430, a head portion 1436, and the visual indicator 1456. In the aspect illustrated, the fixing 1400 does not include an object support. In other aspects, a fixing 1400 may include an object support.

The fixing 1400 may be utilized with a support structure (e.g., the support structure 190 of FIGs. 1A and 1B, having the first side 192, second side 194, and bore 196). The mount fastener 1410 may attach to the support structure 190 through any common manner, including but not limited to through a fastener. In FIGs. 14A and 14B, the mount fastener 1410 is a fir tree fastener, as is described above regarding the mount fastener 210. In other aspects, the mount fastener 1410 may be another type of fastener, as described above. The mount fastener 1410 in FIG. 14B is circular and corresponds to the round shape of the bore 196. In other aspects, the mount fastener 1410 may be ovular or another shape.

The fixing 1400 includes the label 1450 that carries the visual indicator 1456. The label 1450 may include a hole 1452 defined therethrough, the hole 1452 configured to receive the mount fastener 1410 therethrough. The label 1450 may be a tear-off label that includes a perforation 1460 that defines a tear-off portion 1454. The visual indicator 1456 may be defined on the tear-off portion 1454. The visual indicator 1456 may include a visual indicator surface, which may include one or more indicia (e.g., lines, symbols, colors, patterns, and the like). Indicia may be formed of paint, dye, coloring, markings, textures, and the like. The visual indicator 1456 may include one or more colors (e.g., a high-resolution color, a reflective color, a color that glows under black light, etc.).

In use, the tear-off portion 1454 of the label 1450 may be torn off by assembly personnel and/or quality control personnel when the fixation method is checked to be installed correctly to provide a user with a visual cue that indicates an installation status of the fixing 1400. In aspects, the visual indicator 1456 (e.g., indicia) on the tear-off portion 1454 may be scanned to confirm proper assembly was achieved.

### Materials

In aspects, a visual indicator may be formed of a soft material and/or a rigid material (e.g., paper, plastic, polymeric material, paint, etc.) (e.g., the aspects illustrated above in FIGs. 2A-2D, FIG. 3A, FIG. 3B, FIGs. 4A-4C, FIG. 14A, and FIG. 14B). In aspects, a visual indicator may be formed of an elastic material (e.g., the aspects described above with respect to FIGs. 5A-5E, FIG. 6A, FIG. 6B, FIG. 7, FIGs. 9A-9D, and FIGs. 10A-10D). The term "elastic," as used herein, means a material (e.g., an "elastic material") that exhibits recovery from deformation (e.g., stretching, compression) in at least one direction, unless the context indicates otherwise. For example, elastic may refer to a material that, upon application of a compressive force, is deformable from an original relaxed length and that will recover to the original relaxed length upon release of the compressive force. An elastic material may be a thermoplastic elastomeric high-stretch material (e.g., a thermoplastic high-stretch elastomer). Examples of elastic materials for visual installation status indicators disclosed herein include, but are not limited to, butyl rubber, ethylene propylene diene monomer (EPDM) rubber, polyisoprene, neoprene, fluoroelastomer, ethylene propylene rubber (EPR), ethylene-vinyl acetate (EVA), poly(acrylic acid) (PAA), latex, natural latex rubber, polyurethane, nitrile rubber, acrylonitrile butadiene rubber, styrene butadiene, styrene-butadiene rubber (SBR), silicone rubber, polybutadiene, thermoplastic elastomers (TPE) (e.g., thermoplastic rubbers, styrenic block copolymers (thermoplastic styrenics) (TPS), thermoplastic polyolefinelastomers (thermoplastic olefin) (TPO), thermoplastic vulcanizates (TPV), thermoplastic polyurethanes (TPU), thermoplastic urethane, thermoplastic copolyester (TPC) (e.g., thermoplastic polyester elastomers (TPC ET)), thermoplastic polyamides (TPA), styrene ethylene butadiene styrene (SEBS), and the like), poly(styrene butadiene styrene) (SBS), polybutylene terephthalate (PBT) and polytetramethylene glycol (PTMG) copolymer, synthetic rubber, foam rubber, silicone rubber, urethane, elastomer, other rubber-like materials, and the like, and copolymers, blends, and alloys thereof.

As used herein, the term "non-elastic" means any material (e.g., a "non-elastic material") that does not fall within the definition of "elastic" above. A fixing may be formed of a non-elastic material (e.g., the fixings described above with respect to FIGs. 2A-14B). In aspects, a visual indicator may be formed of a non-elastic material (e.g., the aspects described above with respect to FIGs. 8A-8D). A non-elastic material may be a flexible, longitudinally tension-resistant material. Examples of non-elastic materials for fixings and/or the visual installation status indicators disclosed herein include, but are not limited to, metal and polymeric materials (e.g., polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), cross-linked thermoplastics, partially cross-linked thermoplastics, higher temperature resins, ultraviolet (UV) resistant resins, other thermoplastic materials, and the like, and copolymers, blends, or alloys thereof). A non-elastic material may be harder than and/or have a higher melting point than an elastic material.

### Additional Examples

Some additional examples of fixings with visual installation status indicators are as follows:
Example 1. A fixing configured for attaching to a support structure at a bore defined in the support structure, the fixing comprising: a mount fastener configured for longitudinal insertion into the bore; a body section that extends from the mount fastener, the body section configured to contact a first side of the support structure to limit the longitudinal insertion of the mount fastener into the bore; and at least one visual indicator configured to indicate an installation status of the fixing to a user.
Example 2. The fixing of Example 1, wherein the visual indicator has a variable appearance that varies based on the installation status of the fixing.
Example 3. The fixing of Example 2, wherein the variable appearance of the visual indicator includes a length of the visual indicator that varies based on the installation status.
Example 4. The fixing of Example 1, wherein the fixing includes a longitudinal axis along which the mount fastener extends, wherein the body section further comprises: a head portion, the head portion defining an outer edge spaced apart from the longitudinal axis, and wherein in an incomplete installation status, the visual indicator does not extend past the outer edge, and wherein in a complete installation status, the visual indicator extends past the outer edge.
Example 5. The fixing of Example 1, wherein the visual indicator is attached to the mount fastener before the mount fastener is inserted into the bore, with at least a portion of the visual indicator received between a bottom side of the body section and the first side of the support structure.
Example 6. The fixing of Example 5, wherein the visual indicator has an annular shape that includes a first side opposite a second side and an open center defined therethrough, and wherein the open center is sized to receive a portion of the mount fastener therethrough.
Example 7. The fixing of Example 6, wherein the open center defines a first end of the visual indicator, wherein the visual indicator extends from the first end to a second end, wherein the open center has an inner diameter, wherein the second end has an outer diameter, and wherein the outer diameter is greater than the inner diameter.
Example 8. The fixing of Example 5, wherein the visual indicator comprises: a compressible disk configured for compression between a bottom side of the body section and the first side of the support structure, wherein in an uncompressed state the disk has a first diameter, wherein in a compressed state the disk has a second diameter, and wherein the second diameter is greater than the first diameter.
Example 9. The fixing of Example 8, wherein the compressible disk comprises: at least one radially extending notch defined in the compressible disk that defines at least one radial flange in the compressible disk; and at least one sidewall defined in the radial flange segment configured to flatten when the compressible disk is compressed between the bottom side of the body section and the first side of the support structure.
Example 10. The fixing of Example 8, wherein the body section further comprises: a head portion configured to limit the insertion of the mount fastener into the bore, the head portion defining an outer edge spaced apart from a longitudinal axis, wherein in the compressed state the compressible disk flexes to extend an edge of the disk outwards relative to the outer edge to indicate the installation status, wherein in an incomplete installation status the edge of the disk does not extend past the outer edge, and wherein in a complete installation status the edge of the disk extends past the outer edge.
Example 11. The fixing of Example 8, wherein the compressible disk comprises: at least one flute defined in the compressible disk, the flute configured to flatten when the compressible disk is compressed between the bottom side of the body section and the first side of the support structure.
Example 12. The fixing of Example 5, wherein the body section further comprises at least one orifice defined therethrough, and wherein the visual indicator further comprises: an annular flange configured for receipt onto the mount fastener before longitudinal insertion into the bore; and a post extending from the annular flange, the post configured for extending through the orifice, wherein the post extending through the orifice indicates the installation status of the fixing.
Example 13. The fixing of Example 5, wherein the body section further comprises at least one notch defined therethrough, and wherein the visual indicator further comprises: a disk configured for receipt onto the mount fastener before longitudinal insertion into the bore; and at least one flange extending from the disk, a portion of the flange configured for extending through the notch, the flange including a spring arm configured for contacting the bottom side of the body section to force a tip of the flange outwards, wherein a positioning of the tip of the flange relative to the notch indicates the installation status of the fixing.
Example 14. The fixing of Example 1, wherein the visual indicator comprises: an elongated strip having a fixed end extending to at least one free end that defines a length therebetween, the elongated strip attached at the fixed end to the mount fastener, the elongated strip free at the free end and configured to extend out of the bore, wherein a portion of the length that extends out of the bore indicates the installation status of the fixing.
Example 15. The fixing of Example 1, wherein the at least one visual indicator comprises: at least one paint dot disposed on the body section, the paint dot configured to rupture and release paint responsive to the body section contacting the first side of the support structure to indicate the installation status of the fixing.
Example 16. The fixing of Example 15, wherein the at least one paint dot is configured to rupture and emit paint outside of a periphery of the body section to indicate the installation status of the fixing.
Example 17. The fixing of Example 15, wherein the body section further comprises at least one orifice defined therethrough, and wherein the at least one paint dot is configured to rupture and emit paint through the at least one orifice to indicate the installation status of the fixing.
Example 18. The fixing of Example 1, further comprising an object support configured to attach to a component.
Example 19. The fixing of Example 1, wherein the visual indicator further comprises: a tear-off label, the tear-off label comprising: a body including a fastener receiver defined therethrough, the fastener receiver sized to receive a portion of the mount fastener therethrough before the mount fastener is inserted into the bore, with the visual indicator received between a bottom side of the body section and the first side of the support structure, at least a portion of the body configured to be torn off by a user to visually indicate that the fixing is seated in the bore.
Example 20. A fixing configured for attaching to a support structure at a bore defined in the support structure, the fixing comprising: a mount fastener configured for longitudinal insertion into the bore, the mount fastener comprising: a mounting stud; and a plurality of branches extending from the mounting stud; and a body section extending from the mount fastener, the body section configured to contact a first side of the support structure to limit the longitudinal insertion of the mount fastener into the bore, the mount fastener extending from a bottom side of the body section; and at least one visual indicator configured to indicate an installation status of the fixing, wherein the visual indicator comprises indicia applied to at least one of the branches, the indicia configured to visually indicate when the fixing is seated in the bore, wherein the branches are configured for deflection in a direction of the body section upon insertion of the mount fastener into the bore.

### Alternative Language

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### Conclusion

Although implementations for fixings with visual installation status indicators have been described in language specific to certain features and/or methods, the subject of the appended claims is not necessarily limited to the specific features or methods described. Rather, the specific features and methods are disclosed as example implementations for fixings with visual installation status indicators.

## Claims

1. A fixing configured for attaching to a support structure at a bore defined in the support structure, the fixing comprising:
a mount fastener configured for longitudinal insertion into the bore;
a body section that extends from the mount fastener, the body section configured to contact a first side of the support structure to limit the longitudinal insertion of the mount fastener into the bore; and
at least one visual indicator configured to indicate an installation status of the fixing to a user.

2. The fixing of claim 1, wherein the visual indicator has a variable appearance that varies based on the installation status of the fixing.

3. The fixing of claim 2, wherein the variable appearance of the visual indicator includes a length of the visual indicator that varies based on the installation status.

4. The fixing of any one of the preceding claims,
wherein the fixing includes a longitudinal axis along which the mount fastener extends,
wherein the body section further comprises:
a head portion, the head portion defining an outer edge spaced apart from the longitudinal axis, and
wherein in an incomplete installation status, the visual indicator does not extend past the outer edge, and
wherein in a complete installation status, the visual indicator extends past the outer edge.

5. The fixing of any one of the preceding claims, wherein the visual indicator is attached to the mount fastener before the mount fastener is inserted into the bore, with at least a portion of the visual indicator received between a bottom side of the body section and the first side of the support structure.

6. The fixing of any one of the preceding claims,
wherein the visual indicator has an annular shape that includes a first side opposite a second side and an open center defined therethrough, and
wherein the open center is sized to receive a portion of the mount fastener therethrough.

7. The fixing of claim 6,
wherein the open center defines a first end of the visual indicator,
wherein the visual indicator extends from the first end to a second end,
wherein the open center has an inner diameter,
wherein the second end has an outer diameter, and
wherein the outer diameter is greater than the inner diameter.

8. The fixing of any one of the preceding claims, wherein the visual indicator comprises:
a compressible disk configured for compression between a bottom side of the body section and the first side of the support structure,
wherein in an uncompressed state the disk has a first diameter,
wherein in a compressed state the disk has a second diameter, and
wherein the second diameter is greater than the first diameter.

9. The fixing of claim 8, wherein the compressible disk comprises:
at least one radially extending notch defined in the compressible disk that defines at least one radial flange in the compressible disk; and
at least one sidewall defined in the radial flange configured to flatten when the compressible disk is compressed between the bottom side of the body section and the first side of the support structure.

10. The fixing of claim 8 or claim 9,
wherein the body section further comprises:
a head portion configured to limit the insertion of the mount fastener into the bore, the head portion defining an outer edge spaced apart from a longitudinal axis,
wherein in the compressed state the compressible disk flexes to extend an edge of the disk outwards relative to the outer edge to indicate the installation status,
wherein in an incomplete installation status the edge of the disk does not extend past the outer edge, and
wherein in a complete installation status the edge of the disk extends past the outer edge.

11. The fixing of any one of claims 8 to 10, wherein the compressible disk comprises:
at least one flute defined in the compressible disk, the flute configured to flatten when the compressible disk is compressed between the bottom side of the body section and the first side of the support structure.

12. The fixing of any one of the preceding claims,
wherein the body section further comprises at least one orifice defined therethrough, and
wherein the visual indicator further comprises:
an annular flange configured for receipt onto the mount fastener before longitudinal insertion into the bore; and
a post extending from the annular flange, the post configured for extending through the orifice, wherein the post extending through the orifice indicates the installation status of the fixing.

13. The fixing of any one of the preceding claims,
wherein the body section further comprises at least one notch defined therethrough, and
wherein the visual indicator further comprises:
a disk configured for receipt onto the mount fastener before longitudinal insertion into the bore; and
at least one flange extending from the disk, a portion of the flange configured for extending through the notch, the flange including a spring arm configured for contacting the bottom side of the body section to force a tip of the flange outwards, wherein a positioning of the tip of the flange relative to the notch indicates the installation status of the fixing.

14. The fixing of any one of the preceding claims, wherein the visual indicator comprises:
an elongated strip having a fixed end extending to at least one free end that defines a length therebetween, the elongated strip attached at the fixed end to the mount fastener, the elongated strip free at the free end and configured to extend out of the bore, wherein a portion of the length that extends out of the bore indicates the installation status of the fixing.

15. The fixing of any one of the preceding claims, wherein the at least one visual indicator comprises:
at least one paint dot disposed on the body section, the paint dot configured to rupture and release paint responsive to the body section contacting the first side of the support structure to indicate the installation status of the fixing.
